# EUROPÄISCHE PATENTSCHRIFT

(11) **EP 3 925 041 B1**
(45) Veröffentlichungstag und Bekanntmachung des Hinweises auf die Patenterteilung: **01.11.2023**
(21) Anmeldenummer: 20705052.7
(22) Anmeldetag: 12.02.2020
(51) Int. Cl.: H02G 1/12

(54) **VERFAHREN UND VORRICHTUNG ZUR BEARBEITUNG EINES ELEKTRISCHEN KABELS**
METHOD AND DEVICE FOR WORKING AN ELECTRICAL CABLE
PROCÉDÉ ET DISPOSITIF PERMETTANT DE PRODUIRE UN CÂBLE ÉLECTRIQUE

(30) Priorität: 12.02.2019 DE 102019103487
(43) Veröffentlichungstag der Anmeldung: 22.12.2021
(73) Patentinhaber: Metzner Maschinenbau GmbH, 89231 Neu-Ulm (DE); Metzner Holding GmbH, 89079 Ulm (DE)
(72) Erfinder: SORG, Manfred, 89079 Ulm (DE)
(74) Vertreter: Lorenz, Matthias
(86) Internationale Anmeldenummer: PCT/EP2020/053533
(87) Internationale Veröffentlichungsnummer: WO 2020/165206

(56) Entgegenhaltungen:
- WO-A1-2015/125129
- DE-A1- 4 327 356
- US-A- 5 072 632
- US-A1- 2015 128 399
- US-A1- 2015 357 094

## Beschreibung

Die Erfindung betrifft eine Vorrichtung zur Bearbeitung eines einen Mantel und eine darunterliegende Kabelfolie aufweisenden elektrischen Kabels, nach dem Oberbegriff von Anspruch 1.

Die Erfindung betrifft außerdem ein Verfahren zur Bearbeitung eines einen Mantel und eine darunterliegende Kabelfolie aufweisenden elektrischen Kabels, gemäß dem Oberbegriff von Anspruch 8.

In elektrischen Kabeln werden mitunter Kabelfolien zur elektromagnetischen Abschirmung, zum mechanischen Schutz und/oder zum Feuchtigkeitsschutz weiterer Komponenten des Kabels, beispielsweise zum Schutz von elektrischen Leitern, Kabelschirmgeflechten und Isolatoren bzw. Dielektrika, verwendet. Beispielsweise ist es bei elektrischen Kabeln häufig wichtig, dass eine Isolierschicht, welche den elektrischen Leiter isoliert, gegen Feuchtigkeit geschützt ist. Bereits Feuchtigkeit in Form von Dampf kann die Isolierung schädigen. Ferner kann eine Kabelfolie als Trennschicht zwischen einem Kabelschirmgeflecht und dem Kabel(außen)mantel vorgesehen sein, wodurch der Kabelmantel bei einem Abisolierprozess leichter - oder überhaupt erst - abziehbar ist, da sich der Kabelmantel beim Abziehen andernfalls in einem darunter befindlichen Kabelschirmgeflecht mechanisch verhaken bzw. festsetzen kann.

Je nach Einsatz können die Kabelfolien auch als "Schirmfolien", "Isolationsfolien" oder "Schutzfolien" bezeichnet werden. Der vorliegend gewählte Begriff "Kabelfolien" soll alle Einsatzgebiete abdecken.

Derartige Kabelfolien können aus einem einzigen Grundmaterial, z. B. aus einer Schicht aus einem isolierenden Material, beispielsweise einem Kunststoff, oder aus einer Schicht aus einem elektrisch leitfähigen Material, beispielsweise einem Metall, bestehen. Häufig werden aber auch Verbundfolien verwendet, die aus wenigstens zwei Schichten, insbesondere aus wenigstens zwei Schichten aus unterschiedlichen Grundmaterialien bestehen. Zum Hintergrund wird beispielhaft auf die DE 10 2015 106 129 A1 verwiesen, die eine einseitige Schmelz-Aluminium-Kunststoff-Verbundfolie und deren Herstellungsverfahren beschreibt. Außerdem wird auf die DE 100 26 714 A1 verwiesen, die eine halogenfreie Verbundfolie, ein Verfahren zu ihrer Herstellung und ihre Verwendung zur Herstellung flexibler Flachbandkabel beschreibt.

Wenn ein elektrisches Kabel mit einer Kabelfolie automatisiert konfektioniert und in diesem Prozess zumindest teilweise abisoliert werden soll, ist es häufig erforderlich, die Kabelfolie an den entsprechenden Stellen im Laufe des Abisolierprozesses zu entfernen. Da häufig reißfeste bzw. mechanisch robuste Folien eingesetzt werden, ist dies in der Regel aufwändig und lediglich durch manuellen Einsatz überhaupt möglich. Der Vorgang des Entfernens der Kabelfolie ist zeitraubend und verhindert eine vollautomatisierte Kabelkonfektionierung. Zur Vereinfachung des Abisolierens bzw. Entfernens der Kabelfolie wird in der WO 2007/104402 A1 vorgeschlagen, das Kabel bzw. die Kabelfolie bereits so herzustellen, dass die Kabelfolie anschließend leichter entfernt werden kann. Dabei wird die Folie mit einer Anzahl zueinander beabstandeter Prägungen hergestellt, die infolge eine Schwächung des Folienmaterials bewirken. Ein manuelles Abisolieren kann hierdurch erleichtert werden. Nachteilig ist allerdings, dass die Kabelfolie dann im Bereich des gesamten Kabels, also auch im Bereich des Kabels, in dem die Kabelfolie nicht entfernt werden soll, mechanisch geschwächt ist. Die absichtliche Schwächung des Folienmaterials kann somit kontraproduktiv sein. Ferner ist der Herstellungsprozess der Kabelfolie deutlich aufwändiger, da die Prägungen auch derart eingebracht werden müssen, dass diese die Folie möglichst nicht durchdringen, da zumeist der zuvor genannte Feuchtigkeitsschutz gewährleistet sein muss.

Ein Problem, insbesondere beim automatisierten Entfernen der Folie ist, dass die Folie naturgemäß im Vergleich zu den restlichen Komponenten des Kabels sehr dünn ist. Bei dem Versuch die Kabelfolie zu durchschneiden lässt es sich in der Praxis aus diesem Grund nur schwer vermeiden, dass auch darunterliegende Komponenten des Kabels zumindest oberflächlich angeschnitten bzw. angeritzt und damit beschädigt werden. Ein besonderes Problem beim Einschneiden in die Kabelfolie ist dabei, dass das Kabel toleranzbedingt bzw. in der Praxis häufig keinen gleichmäßig kreisförmigen Querschnitt aufweist und die Tiefe des Schnittes demnach variieren kann. Eine Beschädigung einer Isolationsschicht durch einen ungewollt zu tief gesetzten Schnitt kann die Durchschlagsfestigkeit und mechanische Robustheit bzw. Widerstandsfähigkeit der Isolationsschicht gefährden. Analog kann die Leitfähigkeit und mechanische Robustheit, insbesondere Brüchigkeit, elektrischer Leiter bei einer Beschädigung herabgesetzt sein. Insbesondere ein übliches Kabelschirmgeflecht aus - z. B. mit Zinn - beschichtetem Kupfer kann hierfür anfällig sein. Das beschädigte Kabelschirmgeflecht kann in Folge bei Beanspruchung des Kabels an den beschädigten Stellen brechen, wodurch die Masseleitung und elektromagnetische Dichtigkeit des Kabels gefährdet sein können.

Zur Vermeidung des Problems der Beschädigung von Komponenten des Kabels unterhalb der Kabelfolie bei einem Schneiden der Kabelfolie wird in der DE 10 2004 047 384 B3 ein spezielles Kabel offenbart, bei dem eine Füllschicht unterhalb der Kabelfolie vorgesehen ist, wobei bei einem Durchschneiden der Folie die Messerklinge nur die Füllschicht, sozusagen als "Opfermaterial", schädigt. Ein derart aufgebautes Kabel kann anschließend mit einfachen Abisolierwerkzeugen für eine Konfektionierung vorbereitet werden. Ein entsprechend ausgestattetes Kabel ist allerdings in der Herstellung aufwändig und somit teuer, weist ein erhöhtes Gewicht und einen vergrößerten Umfang auf, wodurch es in der Praxis insgesamt unpraktisch erscheint.

Eine geeignete Lösung zum Entfernen der Kabelfolie im Zuge eines automatisierten Prozesses ist dem gesamten bisher bekannten Stand der Technik nicht zu entnehmen. Zwar offenbart die gattungsgemäße EP 3 089 294 A1 eine Kabelbearbeitungseinrichtung und ein Verfahren zum Entfernen einer Schirmfolie von einem geschirmten, mehradrigen Rundkabel, die Schirmfolie wird allerdings in dieser Einrichtung wiederum mit einem Messer geschnitten. Dabei wird versucht so zu schneiden, dass keine Beschädigung der darunterliegenden Isolation oder Kabeladern entsteht. Damit dieses Prinzip überhaupt möglich ist ohne eine Beschädigung zu verursachen, sind spezielle Kabeltypen und besonders geformte Messer erforderlich. Ferner ist in der Praxis nicht auszuschließen, dass eine derartige Kabelbearbeitungsvorrichtung dennoch Beschädigungen der Komponenten des Kabels unterhalb der Kabelfolie verursacht, insbesondere wenn das Kabel keinen vollständig gleichmäßigen kreisrunden Querschnitt aufweist, nicht exakt geführt werden kann und die Messer nicht bei gleichbleibendem Abstand zur Kabelmittelachse symmetrisch über den Kabelmantel gleiten können. Kleinste Unebenheiten und Toleranzen können zu Schäden führen, wenn das Messer toleranzbedingt an einigen Stellen des Kabels tiefer eindringt, als vorgesehen.

Ein weiteres Problem beim automatisierten Entfernen einer Kabelfolie ergibt sich beim axialen Abziehen der um das Kabel umlaufenden Kabelfolie. Insbesondere bei Kabeln mit großem Durchmesser oder wenn das zu entfernende Stück der Kabelfolie vergleichsweise lang ist, ist das automatisierte Entfernen der Kabelfolie nicht ohne Weiteres möglich. In der Regel muss die Kabelfolie deshalb manuell entflochten oder abgezogen werden.

Zum weiteren Hintergrund der Kabelbearbeitung sei an dieser Stelle noch auf die folgenden Druckschriften verwiesen. Die US 5,072,632 A betrifft Kabelabisoliermaschinen, die die Enden von mehradrigen abgeschirmten und ummantelten Kabeln abisolieren, wobei insbesondere vorgesehen ist, ein Kabelschirmgeflecht des Kabels vor dem Abtrennen zunächst entlang der Längsachse des Kabels zu stauchen. Die US 2015/357094 A1 betrifft einen ähnlichen Gegenstand. Außerdem betrifft die DE 43 27 356 A1 eine Vorrichtung zum wenigstens teilweisen Abisolieren von mit einer Isolierung versehenen Litzenleitern, mit einer die Isolierung radial auftrennenden Schneidevorrichtung, einer Ablängvorrichtung sowie einer Festspannvorrichtung für den Litzenleiter. Ferner schlägt die WO 2015/125129 A1 ein Verfahren zum Entfernen einer Kabelfolie von einem elektrischen Kabel mittels eines Lasers vor, und die US 2015/128399 A1 betrifft eine Kabelbearbeitungsanlage zur Bearbeitung mehradriger Kabel, umfassend Bearbeitungsstationen jeweils für mindestens einen jeweiligen Bearbeitungsschritt des Kabelabmantelns.

In Anbetracht des bekannten Stands der Technik besteht die Aufgabe der vorliegenden Erfindung darin, eine Vorrichtung und ein Verfahren zum Bearbeiten eines elektrischen Kabels bereitzustellen, wodurch eine Kabelfolie oder ein Kabelfolienstück einfach, prozesssicher und ohne Beschädigung des Kabels von einem zu bearbeitenden Kabelabschnitt entfernt werden kann.

Die Aufgabe wird für die Vorrichtung mit den in Anspruch 1 aufgeführten Merkmalen und für das Verfahren durch die Merkmale des Anspruchs 8 gelöst.

Die abhängigen Ansprüche und die nachfolgend beschriebenen Merkmale betreffen vorteilhafte Ausführungsformen und Varianten der Erfindung.

Erfindungsgemäß ist eine Vorrichtung zur Bearbeitung eines einen Mantel und eine darunterliegende Kabelfolie aufweisenden elektrischen Kabels vorgesehen. Die Vorrichtung umfasst eine Baugruppe von voneinander unabhängigen Modulen zur Entfernung eines Mantelstücks und eines Kabelfolienstücks von dem Kabel.

Der Bereich des elektrischen Kabels, in dem die Bearbeitung vornehmlich stattfindet, wird nachfolgend mitunter auch als "zu bearbeitender Kabelabschnitt" bezeichnet. Bei dem zu bearbeitenden Kabelabschnitt kann es sich um ein Kabelendstück oder ein Kabelfenster (vom Kabelmantel befreiter Abschnitt des Kabels zwischen den Endstücken) handeln.

Vorzugsweise wird der zu bearbeitende Kabelabschnitt zur elektrischen und/oder mechanischen Verbindung, bzw. Kontaktierung mit einem Steckverbinder, einem elektrischen Gerät und/oder zur elektrischen und/oder mechanischen Befestigung an einem von dem Kabel unabhängigen Bauteil (z. B. einem Gerätegehäuse oder einem Karosserieteil eines Fahrzeugs) zumindest teilweise abisoliert. Es kann beispielsweise vorgesehen sein, dass der zu bearbeitende Kabelabschnitt mit einem Steckverbinder, einem weiteren Kabel und/oder einer Masseklemme elektrisch und/oder mechanisch verbunden wird.

Je nach Aufbau des elektrischen Kabels kann es erforderlich sein, die Kabelfolie bzw. ein Kabelfolienstück in einem entsprechenden Arbeitsschritt zu entfernen, um die in dem Kabel noch tiefer liegenden Strukturen zu erreichen. An dieser Stelle setzt die vorliegende Erfindung an.

Bei dem elektrischen Kabel kann es sich um ein beliebiges elektrisches Kabel mit einem oder mehreren Innenleitern und/oder mit einem oder mehreren Außenleitern handeln. Besonders vorteilhaft eignet sich die Erfindung zum Entfernen der Kabelfolie bzw. dem Kabelfolienstück von elektrischen Kabeln mit gro-ßem Querschnitt für eine hohe Stromübertragung, beispielsweise im Fahrzeugbereich, besonders bevorzugt im Bereich der Elektromobilität.

Im eingelegten Zustand kann das elektrische Kabel gegebenenfalls - aber nicht zwingend - als Teil der Vorrichtung angesehen werden.

Bei dem Mantel des Kabels handelt es sich vorzugsweise um den Außenmantel bzw. um den Kabelmantel des Kabels. Entsprechend handelt es sich bei dem Mantelstück des Kabels vorzugsweise um ein Außenmantelstück bzw. um ein Kabelmantelstück des Kabels. Grundsätzlich kann es sich bei dem Mantel bzw. bei dem Mantelstück allerdings um eine beliebige Komponente des Kabels handeln, die die Kabelfolie bzw. das Kabelfolienstück radial einhüllt bzw. umgibt. Beispielsweise kann es sich um einen beliebigen elektrisch isolierenden Mantel bzw. ein beliebiges isolierendes Mantelstück handeln. Es kann sich aber auch um einen elektrischen Leiter handeln, beispielsweise einen elektrischen Schirm. Zur Vereinfachung wird die Erfindung nachfolgend anhand eines als Kabelmantel ausgebildeten Mantels bzw. anhand eines als Kabelmantelstück ausgebildeten Mantelstücks beschrieben. Dies ist jedoch nicht einschränkend zu verstehen.

Das elektrische Kabel kann einen Außenleiter aufweisen. Der Außenleiter kann vorzugsweise als Kabelschirmgeflecht (auch unter dem Begriff "Geflechtschirm" bekannt) ausgebildet sein, das mehrere miteinander verflochtene Einzeldrähte aufweist. Die Einzeldrähte des Kabelschirmgeflechts können beispielsweise als verzinnte Kupferdrähte ausgebildet sein. Vorzugsweise kann der Außenleiter unmittelbar unter dem Kabelmantel verlaufen; der Außenleiter kann allerdings auch eine weiter innen liegende Kabelkomponente bilden und beispielsweise auch unmittelbar unter der Kabelfolie verlaufen.

Beispielsweise kann die Erfindung vorteilhaft zur Verwendung mit einem einadrigen Koaxialkabel zur Übertragung von elektrischer Leistung verwendet werden, das insbesondere einen Aufbau bestehend aus einem außenliegenden Kabelmantel, gefolgt von einer Kabelfolie, gefolgt von einem Kabelschirmgeflecht, gefolgt von einem Dielektrikum bzw. Isolator und schließlich gefolgt von einem Innenleiter, aufweist. Häufig wird bei einem derartigen Kabel im Zuge der Konfektionierung ein ringförmiger Masseanschluss eines Steckverbinders zunächst mit dem Kabelschirmgeflecht verbunden, wobei das Kabelschirmgeflecht bzw. der Außenleiter nach dessen Freilegung nach hinten umgestülpt wird, wodurch gleichzeitig ein zuverlässiger Zugabfang bereitgestellt werden kann. Zuvor muss im Zuge der Freilegung des Kabelschirmgeflechts zunächst die Kabelfolie bzw. das Kabelfolienstück in dem entsprechenden Kabelabschnitt entfernt werden.

Besonders vorteilhaft eignet sich die Erfindung allerdings auch zum Entfernen der Kabelfolie bzw. dem Endstück der Kabelfolie von elektrischen Kabeln mit geringem Querschnitt für die Datenübertragung, beispielsweise im Fahrzeugbereich, besonders bevorzugt im Bereich der Elektromobilität.

Das elektrische Kabel kann genau einen Innenleiter oder mehrere Innenleiter aufweisen, beispielsweise genau zwei Innenleiter oder mehr Innenleiter, genau drei Innenleiter oder mehr Innenleiter, genau vier Innenleiter oder mehr Innenleiter, genau fünft Innenleiter oder mehr Innenleiter, genau sechs Innenleiter oder mehr Innenleiter, genau sieben Innenleiter oder mehr Innenleiter, genau acht Innenleiter oder noch mehr Innenleiter. Besonders vorteilhaft kann sich die Erfindung zur Verwendung eines Kabels mit einer Anzahl Innenleiter eignen, die einen ovalen Kabelquerschnitt bedingen, wie beispielsweise genau zwei Innenleiter. Ein Innenleiter kann beispielsweise als Einzeldraht oder als Litze mit mehreren Einzeldrähten ausgebildet sein. Der Einzeldraht oder die Einzeldrähte des Innenleiters kann bzw. können aus einem Metalldraht ausgebildet sein, beispielsweise aus einem verzinnten Kupferdraht. Vorzugsweise kann der Innenleiter bzw. können die Innenleiter unterhalb der Kabelfolie verlaufen (zusammen mit der nachfolgend beschriebenen Isolation).

Die Innenleiter können eine jeweilige Isolation oder eine gemeinsame Isolation aufweisen, die die Innenleiter einhüllt und elektrisch isoliert. Die Isolation kann aus einem Kunststoff ausgebildet sein, beispielsweise aus geschäumtem Polypropylen.

Mehrere Innenleiter (zusammen mit ihren jeweiligen Isolationen) können in dem Kabel parallel geführt verlaufen oder verdrillt bzw. verseilt durch das Kabel verlaufen. Insbesondere kann vorgesehen sein, dass jeweils zwei Innenleiter ein differentielles Innenleiterpaar bilden, die mit einem definierten Schlag (Maß der Verdrillung) durch das Kabel verlaufen.

Wie vorstehend erwähnt kann sich die Kabelfolie bzw. das zu entfernende Kabelfolienstück allerdings an einer beliebigen Stelle innerhalb des Kabels relativ zu einem oder mehreren Innenleitern, einem eventuell vorhandenen elektrische Isolator, einem eventuelle vorhandenen Kabelschirmgeflecht und dem Kabelmantel befinden.

Beispielsweise kann sich die Erfindung auch zur Bearbeitung eines Kabelabschnitts eines Kabels eignen, dessen Aufbau insbesondere aus einem außenliegenden Kabelmantel, gefolgt von einem Kabelschirmgeflecht, gefolgt von der Kabelfolie und schließlich gefolgt von weiteren Komponenten, beispielsweise einem Isolator und einem oder mehreren Innenleitern, besteht. Die Kabelfolie kann in diesem Fall teilweise freigelegt werden, indem der Kabelmantel und das darunter liegende Kabelschirmgeflecht zumindest teilweise abisoliert bzw. entfernt werden. Es kann auch vorgesehen sein, dass der Kabelmantel entfernt wird und das Kabelschirmgeflecht nur aufgestellt oder nach hinten umgeschlagen wird, wobei das Kabelschirmgeflecht ohne weitere Bearbeitung umgeschlagen oder aber auch zusätzlich abgelängt und/oder entflochten werden kann. Schließlich muss nur die Zugänglichkeit der Kabelfolie für die weitere erfindungsgemäße Bearbeitung sichergestellt sein.

Die Kabelfolie des elektrischen Kabels kann aus einem einzigen Material, insbesondere aus einem Kunststoff (z. B. Polyethylenterephthalat, PET), aus einem Metall (z. B. Aluminium oder Kupfer) oder aus einer Textilie (z. B. Polyester) bestehen. Vorzugsweise ist die Kabelfolie allerdings als Verbundfolie ausgebildet und umfasst zumindest zwei Einzelschichten unterschiedlichen Materials. Die Kabelfolie kann beispielsweise genau zwei Einzelschichten oder mehr Einzelschichten, genau drei Einzelschichten oder mehr Einzelschichten, genau vier Einzelschichten oder mehr Einzelschichten, genau fünf Einzelschichten oder noch mehr Einzelschichten aufweisen. Die Zusammenstellung der Einzelschichten kann beliebig sein. Beispielsweise kann eine Verbundfolie aus einer Kunststoffschicht (z. B. PET-Schicht) vorgesehen sein, die beidseitig von jeweils einer Metallschicht (z. B. Aluminiumschicht) eingefasst ist.

Erfindungsgemäß ist vorgesehen, dass die Baugruppe ein erstes Modul zum Abtrennen des Mantelstücks von dem Kabel, ein dem ersten Modul nachfolgendes zweites Modul zum Reduzieren der mechanischen Belastbarkeit der Kabelfolie in einer vorgesehenen Rissposition und ein dem zweiten Modul nachfolgendes drittes Modul zum automatisierten Entfernen des Mantelstücks und des Kabelfolienstücks von dem Kabel aufweist.

Die erfindungsgemäße Verteilung der Bearbeitungsschritte auf mehrere voneinander unabhängige Module ermöglicht es, die Vorrichtung als "Fließbandprozess" bzw. als "Taktautomat" mit aufeinanderfolgenden Einzelschritten zu betreiben, um die Bearbeitungszeit bei einer Massenabfertigung zu reduzieren.

Ferner kann die Vorrichtung modular aufgebaut sein, wodurch einzelne Module der Baugruppe ohne großen Aufwand ersetzt, modifiziert oder entfernt werden können. Hierdurch kann die Vorrichtung insbesondere für die Bearbeitung verschiedener Kabelarten mit einfachen Mitteln konfigurierbar sein.

Der Mantel kann im Rahmen der Bearbeitung durch das erste Modul vorzugsweise vollständig ringförmig umlaufend eingeschnitten werden, um das Mantelstück abzutrennen. Es kann aber auch vorgesehen sein, den Mantel nur teilringförmig oder Abschnittsweise ringförmig umlaufend einzuschneiden und z. B. zunächst noch einzelne Verbindungsstege zu belassen.

Es kann vorgesehen sein, dass die Kabelfolie in dem zu bearbeitenden Kabelabschnitt zumindest teilweise freigelegt wird, bevor die Kabelfolie durch das zweite Modul bearbeitet wird. Vorzugsweise wird die Kabelfolie derart freigelegt, dass diese zumindest in dem Bereich, in dem die Kabelfolie abgetrennt werden soll, zugänglich wird.

Bei der vorgesehenen Rissposition handelt es sich vorzugsweise um einen ringförmig um den Umfang der Kabelfolie umlaufenden Bereich mit geringer axialer Erstreckung, an dem die Kabelfolie im späteren Verlauf der Bearbeitung möglichst kontrolliert einreißen soll, um das Kabelfolienstück abzutrennen. Sofern ein kontrolliertes Einreißen allerdings nicht möglich oder unbedingt erforderlich ist, kann sich die Rissposition auch über einen längeren Abschnitt in Axialrichtung erstrecken, beispielsweise auch über das gesamte später zu entfernende Kabelfolienstück. Es können auch mehrere Risspositionen vorgesehen sein.

In einer Weiterbildung der Erfindung kann vorgesehen sein, dass das erste Modul ausgebildet ist, um nach dem Abtrennen des Mantelstücks einen Teilabzug des Mantelstücks von dem Kabel durchzuführen.

Das Mantelstück kann in eine Axialrichtung entlang der Mittelachse des Kabels zumindest teilweise von der Kabelfolie abgezogen werden.

Beispielsweise muss ein Kabelmantel (oder ein sonstiger Mantel, z. B. ein beliebiger Isolator oder ein Außenleiter/Kabelschirmgeflecht), der auf bekannte Weise, beispielsweise durch ein Messer, eingeschnitten wird, zunächst noch nicht vollständig von dem Kabel entfernt werden, bevor die Kabelfolie durch das zweite Modul bearbeitet wird.

Der abgetrennte Kabelmantel (oder der sonstige Mantel), der auch als Kabelmantelstück oder Abisolierstück (oder allgemein als Mantelstück) bezeichnet wird, kann auf dem Kabel verbleiben, vorzugsweise wird der abgetrennte Kabelmantel aber zumindest ein kleines Wegstück in Richtung auf das nahegelegene Kabelende verschoben, um ein Teilstück der Kabelfolie bzw. des Kabelfolienstücks freizulegen, vorzugsweise zumindest die vorgesehene Rissposition der Kabelfolie freizulegen.

In einer Weiterbildung der Erfindung kann außerdem vorgesehen sein, dass die Baugruppe ein dem ersten Modul vorgeordnetes Bestückungsmodul zum Bestücken des Kabels mit wenigstens einem Steckverbinderteil aufweist.

Bei dem Steckverbinderteil kann es sich beispielsweise um einen Dichtring oder um eine Ferrule bzw. um eine Hülse handeln.

Das Steckverbinderteil kann durch das Bestückungsmodul in Axialrichtung entlang der Kabelmittelachse ausgehend von dem freien Ende des Kabels auf das Kabel aufgeschoben werden, vorzugsweise so weit, dass es die nachfolgende Bearbeitung des Kabelabschnitts durch die weiteren Module der Baugruppe nicht behindert.

In einer Weiterbildung der Erfindung kann ferner vorgesehen sein, dass die Baugruppe ein dem dritten Modul nachfolgendes viertes Modul zum Aufbringen einer Stützhülse auf das Kabel aufweist.

Bei der Stützhülse kann es sich insbesondere um ein Bauteil eines im Rahmen einer Kabelkonfektionierung auf dem zu bearbeitenden Kabelende bzw. auf dem Kabel zu montierenden Steckverbinders handeln, um einen Außenleiter des Kabels zu kontaktieren und ggf. um einen Zugabfang bereitzustellen.

Die Stützhülse kann durch das vierte Modul in Axialrichtung entlang der Kabelmittelachse ausgehend von dem freien Ende des Kabels auf das Kabel aufgeschoben werden. Beispielsweise wird die Stützhülse über einen Außenleiter, insbesondere ein Kabelschirmgeflecht des Kabels geschoben und mit diesem vercrimpt. Es kann auch vorgesehen sein, dass die Stützhülse auf ein Dielektrikum bzw. einen Isolator des Kabels aufgeschoben und ein Außenleiter des Kabels, insbesondere ein Kabelschirmgeflecht, auf die Stützhülse zurückgeschlagen und anschließend auf dieser oder zwischen der Stützhülse und einer weiteren Hülse fixiert wird.

Gemäß einer vorteilhaften Weiterbildung der Erfindung kann vorgesehen sein, dass eine Transporteinrichtung der Vorrichtung den zu bearbeitenden Kabelabschnitt des Kabels an die Module der Baugruppe nacheinander zustellt.

Die Transporteinrichtung kann insbesondere in der Art eines Fließbands ausgebildet sein und zumindest ein Kabel von Modul zu Modul transportieren. Vorzugsweise transportiert die Transporteinrichtung allerdings mehrere Kabel jeweils von Modul zu Modul, um mehreren Modulen gleichzeitig ein jeweiliges Kabel zu dessen Bearbeitung zuzustellen, so dass möglichst alle Module ständig ausgelastet sind, um einen hohen Durchsatz zu erzielen.

Die Transporteinrichtung kann eine oder mehrere Greifeinrichtungen aufweisen, um eines oder mehrere Kabel definiert zwischen den Modulen entlang einer ersten Raumrichtung zu transportieren und ggf. an die Module entlang einer zweiten Raumrichtung zuzustellen.

In einer Weiterbildung der Erfindung kann vorgesehen sein, dass das zweite Modul wenigstens ein Rundmesser, wenigstens einen Heizdraht, wenigstens ein Formwerkzeug, wenigstens eine Kältezufuhreinrichtung, wenigstens eine Abziehhilfe, wenigstens eine Absaugeinrichtung und/oder wenigstens eine Zuführeinrichtung für chemische Stoffe aufweist, um zumindest eine von der Kabelmittelachse abgewandte Außenschicht der Kabelfolie zu behandeln, um deren mechanische Belastbarkeit zu reduzieren.

Bei der Außenschicht kann es sich um eine oder mehrere äußere Materialschichten einer Verbundfolie handeln. Es kann sich bei der Außenschicht allerdings auch um einen radial außen liegenden Bereich einer einzelnen Materialschicht einer Verbundfolie oder einer nur eine einzige Materialschicht aufweisenden Kabelfolie handeln.

Vorzugsweise kann durch das Einschneiden eine Sollbruchstelle in die Kabelfolie eingebracht werden. Die Sollbruchstelle kann durch eine Materialverjüngung (Kerbe, Perforation und/oder Ritzspur) eingebracht werden. Durch die Sollbruchstelle kann die Kabelfolie später, bei entsprechender Belastung, vorhersagbar brechen bzw. reißen. Durch die Sollbruchstelle bzw. die Kerbwirkung kann die Kabelfolie an der Rissposition definiert geschwächt sein.

Vorzugsweise wird die Kabelfolie mit dem genannten Rundmesser behandelt. Wohingegen das Einschneiden einer Kabelfolie mit einem geraden Messer oder mit einem Formmesser aufgrund der geringen Dicke der Kabelfolie und der toleranzbehafteten Querschnittsgeometrie des Kabels in der Praxis häufig zu einer nicht tolerierbaren Beschädigung von unter der Kabelfolie verlaufenden Kabelkomponenten führen kann, hat sich überraschend herausgestellt, dass sich das Einschneiden in die Kabelfolie bei Verwendung eines Rundmessers mit hoher Präzision steuern lässt, wodurch eine unerwünschte Beschädigung von Kabelkomponenten vermieden werden kann.

Die Kabelfolie kann vorzugsweise von dem Rundmesser nicht vollständig durchgeschnitten sondern nur angeschnitten werden. Grundsätzlich kann die Kabelfolie aber auch vollständig durchgeschnitten werden, dies ist jedoch nicht bevorzugt. Auch wenn sich der Einschnitt gegebenenfalls über die Außenschicht hinaus auch (teilweise oder vollständig) durch eine tieferliegende Schicht der Kabelfolie oder sogar vollständig durch die Kabelfolie hindurch erstrecken kann, kann es anwendungsbedingt von Vorteil sein, lediglich die Außenschicht der Kabelfolie zu behandeln, da dann die schützende Wirkung der Kabelfolie dazu verwendet werden kann, die unter der Kabelfolie befindlichen Komponenten des Kabels während des Einschneidens zu schützen.

In einer vorteilhaften Ausgestaltung der Erfindung kann vorgesehen sein, dass das Rundmesser derart um eine Rotationsachse antriebslos jedoch drehbar gelagert ist, dass sich das Rundmesser während des Schneidens entlang des Umfangs des Kabels auf der Kabelfolie abrollt.

Dadurch, dass sich das Rundmesser auf der Kabelfolie abrollen kann, kann der notwendige Schneidedruck, der über das Rundmesser in die Kabelfolie eingebracht wird, während des Schneidens einerseits reduziert und außerdem hochpräzise einstellbar sein.

Anstelle eines Rundmessers zum Einschneiden der Kabelfolie kann auch eine beliebige weitere Schneideinrichtung vorgesehen sein, beispielsweise eines oder mehrere Formmesser.

Gemäß einer Ausgestaltung der Erfindung kann vorgesehen sein, dass das Rundmesser oder eine sonstige Schneideeinrichtung eine Schnitttiefenregelung und/oder eine Schnitttiefenbegrenzung aufweist. Vorzugsweise kann zumindest eine Schnitttiefenbegrenzung vorgesehen sein. Die Schnitttiefenregelung und/oder die Schnitttiefenbegrenzung können vorzugsweise ausgebildet sein, um die Schnitttiefe in Abhängigkeit der Querschnittsgeometrie einer die Kabelfolie unmittelbar einhüllenden Kabelkomponente, beispielsweise des Kabelmantels, zu begrenzen. Eine Schnitttiefenbegrenzung kann beispielsweise durch das Führen des Rundmessers bzw. der Schneideeinrichtung entlang einer Kulisse oder entlang des Kabelmantels realisiert sein.

Gemäß einer Ausgestaltung der Erfindung kann vorgesehen sein, dass das Rundmesser oder eine sonstige Schneideeinrichtung eine Schneidedruckregelung und/oder eine Schneidedruckbegrenzung für den von dem Rundmesser bzw. von der Schneideeinrichtung auf die Kabelfolie aufgebrachten Schneidedruck aufweist. Vorzugsweise kann zumindest eine Schneidedruckbegrenzung vorgesehen sein. Der Schneidedruck kann beispielsweise unter Verwendung eines Linearaktuators oder eines elastischen Elements, insbesondere einer Feder (zum Beispiel einer Druckfeder oder einer Zugfeder), vorgegeben und/oder begrenzt werden.

In einer Ausgestaltung der Erfindung kann vorgesehen sein, dass das die Vorrichtung, insbesondere das zweite Modul, eine Führungsbuchse mit einer Durchgangsbohrung zum Durchführen des Kabels aufweist. Das Kabel kann insbesondere mit seinem vorderen Ende durch die Durchgangsbohrung der Führungsbuchse hindurchführbar sein bzw. hindurchgeführt werden. Die Führungsbuchse vermag das Kabel während des Einschneidens zu stabilisieren. Die Führungsbuchse kann außerdem ausgebildet sein, um das Kabel axial und/oder radial zu fixieren. Vorzugsweise ist das Kabel relativ zu der Führungsbuchse verdrehsicher in der Führungsbuchse aufgenommen.

In einer vorteilhaften Ausgestaltung der Erfindung kann vorgesehen sein, dass die Führungsbuchse an einem dem Rundmesser oder einer sonstigen Schneideeinrichtung zugewandten Ende eine Stirnfläche aufweist. Die Stirnfläche kann ein Fenster zur Durchführung des Kabels (bzw. des vorderen Kabelendes) aufweisen. Das Fenster kann optional eine an das Kabel (oder das bereits vorbearbeitete, beispielsweise von dem Kabelmantel und dem Außenleiter befreite, vordere Kabelende) angepasste Geometrie aufweisen. Es kann vorzugsweise entlang der Stirnfläche bzw. entlang der Buchsenkante der Führungsbuchse geschnitten werden. Dadurch, dass die Führungsbuchse ein Fenster zur Durchführung des Kabels (bzw. dessen vorderen Kabelendes) an der Stirnseite aufweist, insbesondere wenn das Fenster an die Außengeometrie des Kabels angepasst ist, kann das Kabel vorteilhaft gegen ein Verdrehen gesichert sein, beispielsweise wenn das Kabel eine ovale bzw. eine sonstige nicht runde Geometrie aufweist. Die Orientierung des Kabels innerhalb der Führungsbuchse kann bekannt sein, was für ein gleichmäßiges Einschneiden in die Kabelfolie von Vorteil sein kann. Optional kann das Rundmesser entlang des Außenradius der Führungsbuchse um die Führungsbuchse herum geführt sein, um eine Schnitttiefenbegrenzung bereitzustellen.

Erfindungsgemäß weist das dritte Modul der Vorrichtung außerdem Mittel auf, um das Kabel im Bereich des zu entfernenden Kabelfolienstücks zu verdrehen und/oder zu verbiegen.

Wenn mittels des zweiten Moduls bereits ein Riss zumindest teilweise in die Kabelfolie und/oder entlang der Kabelfolie eingebracht wurde, kann dieser Riss durch das Verdrehen und/oder Verbiegen des Kabels erweitert werden. Wenn zuvor kein Riss eingebracht, sondern die Kabelfolie mechanisch (unsichtbar) lediglich geschwächt wurde, kann durch das Verdrehen und/oder Verbiegen des Kabels der Riss auch erst entstehen.

Der Erfinder hat erkannt, dass insbesondere eine mechanische Belastung auf Grundlage von Torsion und/oder Biegung zu dem gewünschten Ergebnis führen kann.

In einer Weiterbildung der Erfindung kann vorgesehen sein, dass das dritte Modul wenigstens eine Halteeinrichtung aufweist, um das Mantelstück an einer ersten Halteposition entlang der Kabelmittelachse zu halten, und wobei das dritte Modul eine Fixiereinrichtung aufweist, um den Mantel des Kabels an einer ersten Fixierposition zu halten, wobei die Halteeinrichtung und die Fixiereinrichtung derart ausgebildet sind, dass diese relativ aufeinander zustellbar sind, um das Kabelfolienstück unmittelbar oder mittelbar zu stauchen.

Auf diese Weise kann der zwischen der ersten Halteposition und der ersten Fixierposition verlaufende Abschnitt der Kabelfolie bzw. das Kabelfolienstück unmittelbar oder mittelbar gestaucht werden.

Die erste und nachfolgend noch beschriebenen weiteren Haltepositionen oder Fixierpositionen beziehen sich dabei jeweils auf eine axiale Position entlang des Kabels bzw. des Mantels und lassen sich somit bezogen auf ein umgebendes, absolutes Koordinatensystem zusammen mit dem Kabel bzw. mit dem Mantel verschieben.

Die relative Bewegung der Halteposition auf die Fixierposition kann beispielsweise über eine axiale Länge von bis zu 20 mm erfolgen, vorzugsweise über eine axiale Länge von bis zu 10 mm erfolgen, besonders bevorzugt über eine axiale Länge von bis zu 8 mm erfolgen, und ganz besonders bevorzugt über eine axiale Länge von bis zu 5 mm erfolgen. Die relative Bewegung der Halteposition auf die Fixierposition kann beispielsweise über eine axiale Länge von mindestens 0,5 mm erfolgen, vorzugsweise über eine axiale Länge von mindestens 1 mm erfolgen, besonders bevorzugt über eine axiale Länge von mindestens 3 mm erfolgen, und ganz besonders bevorzugt über eine axiale Länge von mindestens 5 mm erfolgen.

In der Regel kann eine relative Bewegung der Halteposition auf die Fixierposition über eine Länge von 5 mm von Vorteil sein.

In einer Weiterbildung kann vorgesehen sein, dass die Fixiereinrichtung entlang einer Zustellrichtung für das Kabel auf die Halteeinrichtung zustellbar ist, um die Kabelfolie zu stauchen. Die Halteposition kann in diesem Falle durch die Halteeinrichtung unbeweglich gehalten werden.

Eine derartige Zustellung kann insbesondere von Vorteil sein, wenn sich die erste Fixierposition auf dem nicht abgetrennten Abschnitt des Mantels oder auf dem nicht zu bearbeitenden Abschnitt des Kabels befindet. Bei der Fixierposition kann es sich beispielsweise um eine axiale Position auf dem Kabel handeln, an der eine Zustelleinrichtung das Kabel hält und in oder entgegen einer Zustellrichtung im Rahmen der Kabelbearbeitung verschiebt. Eine bereits vorhandene Zustelleinrichtung und eine bereits vorhandene Fixierposition kann bzw. können damit für die Stauchung der Kabelfolie vorteilhaft wiederverwendet werden.

Unter einer Bewegung der Halteposition und der Fixierposition relativ aufeinander zu kann aber auch eine Bewegung der Halteposition in Richtung auf die Fixierposition zu verstehen sein, wobei die Fixierposition unbeweglich gehalten wird. Es kann auch vorgesehen sein, dass die Halteposition als auch die Fixierposition bewegt wird.

Die Kabelfolie muss zum Entfernen aber nicht unbedingt gestaucht werden. Es kann auch vorgesehen sein, die Kabelfolie im Rahmen der Bearbeitung durch das dritte Modul ausschließlich zu verbiegen oder zu verdrehen, um die Kabelfolie an der vorgesehenen Rissposition zu brechen.

In einer vorteilhaften Ausgestaltung der Erfindung kann vorgesehen sein, dass das dritte Modul ein Greifwerkzeug aufweist das eingerichtet ist, um das abzutrennende Endstück der Kabelfolie angrenzend an die Rissposition zu ergreifen. Vorzugsweise ist das Greifwerkzeug eingerichtet, um ausschließlich das Endstück der Kabelfolie zu ergreifen. Besonders bevorzugt ist das Greifwerkzeug eingerichtet, um das Endstück der Kabelfolie im Bereich eines vorderen Endabschnitts zu ergreifen.

In einer Ausgestaltung der Erfindung kann vorgesehen sein, dass das Greifwerkzeug zwei in Richtung auf die Kabelmittelachse zustellbare Greifbacken aufweist. Grundsätzlich können auch mehr als zwei Greifbacken vorgesehen sein, beispielsweise drei Greifbacken oder mehr Greifbacken oder vier Greifbacken oder noch mehr Greifbacken. Die Greifbacken können in einer linearen Bewegung auf die Kabelmittelachse zustellbar sein. Die Greifbacken können allerdings auch in einer kurvigen Bewegung an die Kabelmittelachse zustellbar sein. Die Greifbacken können an jeweiligen Klemmschenkeln angeordnet sein. Die Klemmschenkel können optional in einem gemeinsamen Drehpunkt gelagert sein.

Gemäß einer Ausgestaltung der Erfindung kann vorgesehen sein, dass das dritte Modul eine Aktuatoreinrichtung aufweist die eingerichtet ist, um das Kabel zusammen mit der Kabelfolie derart zu verdrehen und/oder zu verbiegen, dass das Endstück der Kabelfolie an der Rissposition abgetrennt wird. Die Aktuatoreinrichtung kann beispielsweise einen, zwei, drei, vier oder mehr an das Kabel zustellbare Stö-ßel aufweisen, um das Kabel zusammen mit der Kabelfolie zu verbiegen. Die Aktuatoreinrichtung kann beispielsweise auch wenigstens einen Exzenter aufweisen, um das Kabel zusammen mit der Kabelfolie zu verbiegen.

Die Aktuatoreinrichtung kann eingerichtet sein, um das Kabel zusammen mit der Kabelfolie entlang wenigstens eines Freiheitsgrades, vorzugsweise entlang zumindest zweier Freiheitsgrade, zu verbiegen.

In einer vorteilhaften Ausgestaltung der Erfindung kann vorgesehen sein, dass die Aktuatoreinrichtung eingerichtet ist, um das Greifwerkzeug entlang zumindest eines Rotationsfreiheitsgrades (relativ zu der Kabelmittelachse) zu verkippen, während das Greifwerkzeug das Kabel bzw. die Kabelfolie bzw. das Endstück der Kabelfolie fixiert. Eine mechanische Beanspruchung der Kabelfolie an der Rissposition kann insbesondere vorteilhaft über das Greifwerkzeug in das Kabel bzw. in die Kabelfolie / das Endstück der Kabelfolie eingeleitet werden. Die Aktuatoreinrichtung kann somit vorteilhaft mit dem Greifwerkzeug, beispielsweise mit den Greifbacken oder den Klemmschenkeln, gekoppelt sein. Außerdem kann das geschlossene Greifwerkzeug die durch das Verdrehen und/oder Verbiegen eingeleitete mechanische Belastung auf die Kabelfolie noch erhöhen, da ein Ausgleich der sich durch das Verdrehen / Verbiegen ändernden Wegstrecke der Kabelfolie verhindert wird, wodurch das Einreißen der Kabelfolie schon bei geringen Auslenkungen vollständig und sicher erfolgen kann.

Die Erfindung betrifft auch ein System zum Konfektionieren von elektrischen Kabeln, umfassend eine Einrichtung zum Ablängen des elektrischen Kabels, eine Einrichtung zum Öffnen, Aufstellen und/oder Zurückstülpen eines Kabelschirmgeflechts und/oder eine Einrichtung zum Aufbringen und Kontaktieren eines Steckverbinderteils sowie eine Vorrichtung zur Bearbeitung eines elektrischen Kabels, vorzugsweise eine Vorrichtung gemäß den vorstehenden und nachfolgenden Ausführungen.

Ein derart vollautomatisiertes Konfektionierungssystem unter Verwendung einer Vorrichtung zur Bearbeitung eines elektrischen Kabels mit den genannten Modulen kann erfindungsgemäß ohne Beschädigung der unter der Kabelfolie befindlichen Komponenten des Kabels möglich sein. Zuvor war es erforderlich, die Kabelfolie innerhalb eines derartigen Systems manuell, d. h. von Hand, umständlich zu entfernen.

Bezüglich des Systems zum Konfektionieren von elektrischen Kabeln bietet es sich an, die entsprechenden Einrichtungen als "Fließbandprozess" bzw. als "Taktautomat" in aufeinanderfolgenden Einzelschritten anzuordnen, um die Bearbeitungszeit bei einer Massenabfertigung zu reduzieren.

Die Erfindung betrifft außerdem ein Verfahren zur Bearbeitung eines einen Mantel und eine darunterliegende Kabelfolie aufweisenden elektrischen Kabels, wonach eine Baugruppe von voneinander unabhängigen Modulen zur Entfernung eines Mantelstücks und eines Kabelfolienstücks von dem Kabel verwendet wird. Dabei ist vorgesehen, dass ein erstes Modul der Baugruppe das Mantelstück von dem Kabel abtrennt, wonach ein zweites Modul der Baugruppe die mechanische Belastbarkeit der Kabelfolie in einer vorgesehenen Rissposition reduziert und wonach ein drittes Modul der Baugruppe das Mantelstück und das Kabelfolienstück automatisiert von dem Kabel entfernt.

Die Bearbeitung des Kabels lässt sich erfindungsgemäß vorteilhaft auf einzelne Verfahrensschritte aufteilen, die durch die jeweiligen Module der Baugruppe durchgeführt werden.

In einer Weiterbildung der Erfindung kann vorgesehen sein, dass das zweite Modul zumindest eine der Kabelmittelachse abgewandte Außenschicht der Kabelfolie zumindest im Bereich der vorgesehenen Rissposition einer thermischen Behandlung, einer chemischen Behandlung, einer abrasiven Behandlung und/oder einem Saugvorgang unterzieht und/oder die Kabelfolie einschneidet und/oder eine Abziehhilfe auf die Kabelfolie aufklebt und abzieht.

Dadurch, dass die Kabelfolie erst zur Entfernung oder zur Unterstützung der Entfernung der Kabelfolie behandelt wird, kann die Kabelfolie in den nicht behandelten Abschnitten des Kabels nach wie vor ihre komplette schützende Wirkung (elektromagnetisch, mechanisch und/oder dichtend) in vollem Umfang bereitstellen. Die Kabelfolie muss damit nicht bereits während der Herstellung des Kabels in ihrer mechanischen Belastbarkeit manipuliert werden, was die Herstellung des Kabels ferner vereinfacht.

Grundsätzlich kann vorgesehen sein, die Kabelfolie mit einem Messer vorzubehandeln. Vorzugsweise wird die Kabelfolie bei der vorstehend beschriebenen Bearbeitung allerdings nicht geschnitten (die Kabelfolie kann im Rahmen der Erfindung aber auch geschnitten werden). Somit kann keine Beschädigung der unter der Kabelfolie befindlichen Komponenten des Kabels stattfinden, insbesondere wenn lediglich die Außenschicht behandelt wird. Sofern ein Messer zum Schneiden der Kabelfolie verwendet wird, kann sich allerdings ein Rundmesser besonders gut eignen, da sich ein Rundmesser auf dem Umfang des Kabels bzw. der Kabelfolie gut abrollen kann.

Ein Kabelschirmgeflecht ist beispielsweise häufig aus Schirmlitzen bestehend aus verzinntem Kupfer aufgebaut. Die auf dem Kupfer befindliche Zinnschicht ("Ziehhaut") darf dabei in der Regel nicht beschädigt werden, da die mechanische Belastbarkeit des Kabels aufgrund der Brüchigkeit des reinen Kupfers hierdurch beeinträchtigt werden kann. Häufig ist eine Kabelfolie schützend um ein derartiges Kabelschirmgeflecht gewickelt, wobei die Erfindung besonders vorteilhaft zum Entfernen einer derartigen Kabelfolie verwendet werden kann, da eine Beschädigung des darunter liegenden Kabelschirmgeflechts ausgeschlossen werden kann.

Mitunter ist die zu entfernende Kabelfolie aber auch unter einem Kabelschirmgeflecht und auf einer weiteren Komponente des Kabels, insbesondere einem Dielektrikum bzw. einem Isolator angeordnet. Auch bei einem derartigen Kabelaufbau ist die Erfindung vorteilhaft einsetzbar, da dann eine Beschädigung des Dielektrikums bzw. des Isolators ausgeschlossen sein kann. Eine Beschädigung des Dielektrikums bzw. des Isolators kann beispielsweise dessen mechanische Belastbarkeit und damit dessen Langzeitstabilität negativ beeinflussen. Ferner können die isolierenden bzw. elektrischen Eigenschaften des Dielektrikums/Isolators verschlechtert sein.

Abhängig von der gewählten Behandlung der Kabelfolie ist es auch möglich, die Kabelfolie vollständig bzw. durchgängig zu behandeln, d. h. die Kabelfolie auch in Bereichen der Kabelfolie unterhalb der Au-ßenschicht durch die genannten Varianten zur Entfernung oder zur Unterstützung der Entfernung zu behandeln, wenn dadurch keine Beeinträchtigung der unter der Kabelfolie befindlichen Komponenten des elektrischen Kabels zu erwarten ist.

Auch wenn sich die Behandlung gegebenenfalls über die Außenschicht hinaus auch in die Innenschicht bzw. vollständig durch die Kabelfolie erstrecken kann, kann es anwendungsbedingt von Vorteil sein, lediglich die Außenschicht zu behandeln, da dann die schützende Wirkung der Kabelfolie dazu verwendet werden kann, die unter der Kabelfolie befindlichen Komponenten des Kabels während der Behandlung durch die vorstehend genannten Varianten des Verfahrens zu schützen.

Es kann vorgesehen sein, dass zur Unterstützung der Entfernung der Kabelfolie eine Vorbearbeitung vor dem Entfernen der Kabelfolie zumindest im Bereich der vorgesehenen Rissposition durch eine der Varianten (thermische Behandlung, chemische Behandlung, abrasive Behandlung, Einschneiden, Saugvorgang und/oder Abziehhilfe) durchgeführt wird.

In einer Ausgestaltung der Erfindung kann vorgesehen sein, dass das zweite Modul zur Unterstützung der Entfernung der Kabelfolie die mechanische Belastbarkeit der Kabelfolie zumindest teilringförmig, abschnittsweise oder vollständig umlaufend im Bereich einer vorgesehenen Rissposition reduziert.

Beispielsweise kann vorgesehen sein, dass die mechanische Belastbarkeit symmetrisch umlaufend entlang des Umfangs der Kabelfolie reduziert wird.

Es kann zusätzlich oder alternativ auch vorgesehen sein, dass die mechanische Belastbarkeit der Kabelfolie entlang der Kabelmittelachse vollständig oder abschnittsweise im Bereich des zu bearbeitenden Kabelabschnitts reduziert wird.

Gemäß der Ausgestaltung können "Sollbruchstellen" in die Kabelfolie eingebracht werden, deren Anzahl und Umfang anwendungsspezifisch an das Kabel, die Kabelfolie und gegebenenfalls weitere Parameter anzupassen ist.

Es kann vorgesehen sein, die Kabelfolie im Bereich der vorgesehenen Rissposition im Zuge der Vorbearbeitung zumindest teilringförmig, vollständig oder abschnittsweise umlaufend entlang des Umfangs der Kabelfolie zu prägen und/oder zu perforieren.

In einer Weiterbildung der Erfindung kann vorgesehen sein, dass das zweite Modul einen teilringförmig oder ringförmig umlaufenden Riss an der vorgesehenen Rissposition derart in die Kabelfolie einbringt, dass sich der Riss durch die Außenschicht und vorzugsweise zumindest teilweise auch durch eine unter der Außenschicht befindliche Innenschicht der Kabelfolie erstreckt.

Es kann also vorgesehen sein, dass ein Riss teilringförmig, vollständig oder abschnittsweise umlaufend entlang des Umfangs der Kabelfolie und/oder entlang der Mittelachse des Kabels lediglich in die Außenschicht oder in einen Teil der Außenschicht eingebracht wird. Es kann aber auch vorgesehen sein, dass ein Riss teilringförmig, vollständig oder abschnittsweise umlaufend entlang des Umfangs der Kabelfolie und/oder entlang der Mittelachse des Kabels in Radialrichtung vollständig durch die Kabelfolie, d. h. durch die Außenschicht und durch die Innenschicht, eingebracht wird. Auch ein Riss, der nur teilweise in die Innenschicht der Kabelfolie eindringt, ist möglich.

Ein Riss in der Kabelfolie kann eine geeignete Sollbruchstelle darstellen bzw. die mechanische Belastbarkeit der Kabelfolie an der Rissposition in gewünschtem Maße reduzieren. Die Art des Risses, d. h. Länge, Tiefe und Breite sowie gegebenenfalls auch die Anzahl der Risse, kann der Fachmann anwendungsspezifisch festlegen.

In einer Weiterbildung der Erfindung kann vorgesehen sein, dass das dritte Modul das Kabel im Bereich des zu entfernenden Kabelfolienstücks derart verdreht und/oder verbiegt, dass die Kabelfolie teilringförmig oder ringförmig umlaufend einreißt.

Grundidee dieser Weiterbildung ist es, die Kabelfolie nach einer der genannten Varianten zur Vorbehandlung im Rahmen des zweiten Moduls an der oder den entsprechenden Stellen gezielt mechanischer Belastung auszusetzen derart, dass die Kabelfolie vorzugsweise (aber nicht unbedingt ausschließlich) an der vorgesehenen Rissposition einreißt.

Es kann vorgesehen sein, dass durch die Vorbehandlung (thermische Behandlung, chemische Behandlung, abrasive Behandlung, Einschneiden, Saugvorgang und/oder Abziehhilfe) durch das zweite Modul ein Riss zumindest nur in der Außenschicht der Kabelfolie erzeugt wurde. Bei der Außenschicht handelt es sich häufig um eine Kunststofffolie, während die - optional zusätzlich vorhandene - Innenschicht häufig als Metallschicht ausgebildet ist. Eine derart ausgebildete Innenschicht lässt sich durch ein Verdrehen bzw. Verbiegen relativ leicht brechen bzw. einreißen, um einen Riss zu erzeugen.

In einer Ausgestaltung der Erfindung kann vorgesehen sein, dass die thermische Behandlung einen Schmelzprozess und/oder einen Kälteprozess umfasst.

Durch einen Schmelzprozess können Teile der Kabelfolie, insbesondere im Bereich der Außenschicht der Kabelfolie, abgeschmolzen werden. Anstelle eines Schmelzprozesses kann auch ein Verdampfen der Kabelfolie, insbesondere im Bereich deren Außenschicht, vorgesehen sein.

Ein Kälteprozess kann vorteilhaft sein, um die Brüchigkeit der Kabelfolie, insbesondere im Bereich der Außenschicht, zumindest vorübergehend zu erhöhen. Insbesondere kann hierfür eine Vereisungstechnik unter Zuhilfenahme von Flüssigstickstoff oder ähnlichen Kältemitteln vorgesehen sein.

In einer Weiterbildung der Erfindung kann außerdem vorgesehen sein, dass für die thermische Behandlung wenigstens ein erhitztes Formwerkzeug und/oder wenigstens ein Heizdraht verwendet wird, insbesondere um die Kabelfolie an- oder abzuschmelzen.

Bei dem Formwerkzeug kann es sich vorzugsweise um eine konkav geformte, einem Schneidewerkzeug ähnliche Einrichtung handeln. Es kann - unabhängig von der Form des Formwerkzeugs - beispielsweise ein stumpfes Schneidemesser vorgesehen sein, das die Kabelfolie während der thermischen Vorbearbeitung nicht zu durchschneiden, sondern über die Kontaktflächen der Schneide lediglich gezielt zu durchschmelzen vermag. Die Werkzeugschneide kann beispielsweise schmaler bzw. kleiner sein als 10 mm, vorzugsweise kleiner sein als 5 mm, beispielsweise auch kleiner sein als 2 oder kleiner sein als 1 mm. Vorzugsweise ist die Schneide aber breiter als 1 mm und beträgt ungefähr 5 mm. Gegebenenfalls kann es sich bei dem erhitzten Formwerkzeug auch um das Formwerkzeug handeln, mit dem der Kabelmantel zum Freilegen der Kabelfolie durchtrennt wird.

Es kann auch vorgesehen sein, dass ein Heizdraht, eine Heizspule oder eine ähnliche Einrichtung verwendet werden, beispielsweise in konkaver bzw. dem Kabel angepasster Form oder aber auch linear ausgebildet.

Insbesondere kann vorgesehen sein, dass zwei, drei, vier, fünf oder mehr Formwerkzeuge und/oder Heizdrähte verwendet werden, die umlaufend um das Kabel angeordnet sind, um die Kabelfolie teilringförmig, vollständig oder abschnittsweise umlaufend entlang des Umfangs der Kabelfolie zu bearbeiten.

Es kann vorgesehen sein, dass die Kabelfolie lediglich im Bereich der Außenschicht an- oder abgeschmolzen wird. Es kann aber auch vorgesehen sein, dass die Kabelfolie vollständig durchgeschmolzen oder zumindest eine Innenschicht, die unterhalb der Außenschicht liegt, teilweise angeschmolzen wird.

In einer Ausgestaltung kann vorgesehen sein, dass das Kabel, das wenigstens eine Formwerkzeug und/oder der wenigstens eine Heizdraht während der thermischen Behandlung gedreht werden. Insbesondere kann vorgesehen sein, dass das wenigstens eine Formwerkzeug und/oder der wenigstens eine Heizdraht während der thermischen Behandlung entlang des Umfangs des Kabels umlaufend um das Kabel bewegt wird.

Somit können insbesondere Formwerkzeuge und/oder Heizdrähte oder Ähnliches verwendet werden, die einen linearen Aufbau aufweisen, d. h. das Kabel nicht oder zumindest nur teilweise umgreifen.

In einer Ausgestaltung kann außerdem vorgesehen sein, dass für den Schmelzprozess eine Schmelztemperatur verwendet wird, die größer ist als die Schmelztemperatur der Außenschicht der Kabelfolie, aber kleiner ist als die Schmelztemperatur der Innenschicht der Kabelfolie und/oder die Schmelztemperatur eines Kabelschirmgeflechts oder eines Isolators bzw. Dielektrikums (oder einer sonstigen Komponente) des Kabels.

Es kann aber auch vorgesehen sein, dass als Schmelztemperatur eine Temperatur gewählt wird, die größer ist als die Schmelztemperatur der Außenschicht und der Innenschicht der Kabelfolie, aber kleiner ist als die Schmelztemperatur eines Kabelschirmgeflechts oder eines Isolators bzw. Dielektrikums (oder einer sonstigen Komponente) des Kabels. Die Kabelfolie kann damit auch vollständig durchgeschmolzen werden, ohne weitere Komponente des Kabels zu schädigen.

Es kann eine Schmelztemperatur vorgesehen sein, die den Kabelmantel, ein eventuell vorhandenes Kabelschirmgeflecht, ein eventuell vorhandenes Dielektrikum bzw. einen Isolator und/oder den wenigstens einen Innenleiter des Kabels nicht negativ beeinflusst.

Grundsätzlich kann eine beliebige Schmelztemperatur verwendet werden, insbesondere wenn der Schmelzprozess nur sehr kurz und ggf. nur zum Schmelzen der Außenschicht der Kabelfolie vorgesehen ist.

Beispielsweise beträgt die Schmelztemperatur von PET 250 °C bis 400 °C, was deutlich unter der Schmelztemperatur von Aluminium und dem als Kabelmantel häufig verwendeten Silikon liegt. Eine Schmelztemperatur oberhalb von 250 °C bis 300 °C kann somit bevorzugt sein. Es können allerdings beliebige Schmelztemperaturen verwendet werden, beispielsweise eine Schmelztemperatur im Bereich von 100 °C bis 1.000 °C (oder mehr), 200 °C bis 700 °C (oder mehr) oder 250 °C bis 500 °C (oder mehr). Beispielsweise kann eine Schmelztemperatur von 300 °C bis 400 °C, insbesondere 360 °C bis 380° C von Vorteil sein.

Für die thermische Behandlung kann auch vorgesehen sein, dass die Kabelfolie unter Verwendung einer gerichteten (Mikro-)Flamme, beispielsweise einer Gasflamme, und/oder unter Verwendung eines Lasers an- oder abgeschmolzen wird. Vorzugsweise wird in diesem Fall das Kabel während der Behandlung gedreht.

Es kann, wie vorstehend bereits erwähnt, auch eine chemische Behandlung vorgesehen sein. Dabei kann eine Säure oder eine Base verwendet werden, insbesondere eine Säure oder Base, die lediglich oder im Wesentlichen die Kabelfolie, insbesondere die Außenschicht der Kabelfolie, angreift. Durch Verwendung einer Säure oder Base kann die Außenschicht und/oder die Innenschicht der Kabelfolie zumindest im Bereich der vorgesehenen Rissposition abgearbeitet oder zumindest in deren mechanischer Belastbarkeit reduziert werden.

Zur Reduzierung der mechanischen Belastbarkeit kann grundsätzlich aber eine beliebige chemische Behandlung vorgesehen sein, wobei zumindest im Bereich der vorgesehenen Rissposition eine chemische Reaktion insbesondere der Außenschicht der Kabelfolie ausgelöst werden kann, beispielsweise eine Oxidation, die die mechanische Belastbarkeit der Kabelfolie herabsetzt.

Zur Entfernung oder zur Unterstützung der Entfernung der Kabelfolie kann auch ein Saugvorgang vorgesehen sein, wobei beispielsweise unter Verwendung von Unterdruck ein Saugwerkzeug zumindest im Bereich der vorgesehenen Rissposition, beispielsweise ein konkav geformtes Saugwerkzeug, angesetzt wird, wobei die Außenschicht und/oder Innenschicht bzw. die Kabelfolie zumindest im Bereich der vorgesehenen Rissposition abgezogen bzw. ein/abgerissen werden kann.

Der Saugvorgang kann insbesondere zur Entfernung der Kabelfolie auch ergänzend bzw. unterstützend zu anderen Behandlungen eingesetzt werden.

Ferner kann eine abrasive Behandlung, insbesondere ein Schleif- oder Bürstprozess, zumindest im Bereich der vorgesehenen Rissposition vorgesehen sein, um zumindest die Außenschicht der Kabelfolie teilweise abzutragen, insbesondere um die mechanische Belastbarkeit der Kabelfolie zu reduzieren.

Schließlich ist es auch möglich, eine Abziehhilfe zumindest teilweise umlaufend entlang des Umfang der Kabelfolie aufzukleben bzw. stoffschlüssig mit der Außenschicht der Kabelfolie zu verbinden, wodurch die Kabelfolie oder zumindest die Außenschicht der Kabelfolie bei einem Abziehen der Abziehhilfe entfernt bzw. ein/abgerissen werden kann. Der zurückbleibende Teil der Kabelfolie, beispielsweise die Innenschicht, weist anschließend eine verringerte mechanische Belastbarkeit auf und kann gegebenenfalls abgesaugt oder anderweitig entfernt werden.

Auch das Einbringen eines ringförmig, abschnittsweise oder teilweise umlaufenden Schnitts in die Kabelfolie mittels eines oder mehrerer Messer, vorzugsweise Formmesser, kann vorgesehen sein. Gegebenenfalls kann derart geschnitten werden, dass gleichzeitig der Kabelmantel ringförmig umlaufend eingeschnitten und die Folie zumindest im Bereich einer oberen Schicht perforiert wird.

In einer Ausgestaltung kann insbesondere vorgesehen sein, dass die mechanische Belastbarkeit der Kabelfolie durch die Vorbearbeitung im Rahmen des zweiten Moduls reduziert wird, indem die Torsionsfestigkeit und/oder die Biegefestigkeit der Kabelfolie, insbesondere der Außenschicht der Kabelfolie, reduziert wird und/oder die Brüchigkeit der Kabelfolie, insbesondere der Außenschicht der Kabelfolie, erhöht wird, damit diese mechanisch leichter bricht.

Insbesondere soll die Anfälligkeit zur Ausbildung von Rissen in dem Bereich, in dem die mechanische Belastbarkeit reduziert wurde, gefördert werden.

In einer Ausgestaltung der Erfindung kann vorgesehen sein, dass das dritte Modul ein, zwei, drei, vier oder mehr Aktuatoren (insbesondere Linearmotoren oder angetriebene Zylinder) und/oder wenigstens ein Exzenter aufweist, um den zu bearbeitenden Kabelabschnitt zu verdrehen und/oder entlang wenigstens eines Freiheitsgrades zu verbiegen.

Vorzugsweise sind vier Aktuatoren vorgesehen, um den zu bearbeitenden Kabelabschnitt in zumindest zwei Freiheitsgraden zu verbiegen. Hierdurch kann in dem zu bearbeitenden Bereich der Kabelfolie, dessen mechanische Belastbarkeit vorher reduziert wurde, ein Bruch bzw. Riss technisch leicht ausgebildet werden.

Es kann vorgesehen sein, mittels der Aktuatoren gegen das freie Ende des Kabelabschnitts zu schlagen, vorzugsweise in zeitlicher Abfolge. Beispielsweise kann ein erster Aktuator angesteuert werden, um einen ersten Schlag gegen das freie Ende auszuführen, wonach ein gegenüberliegender Aktuator einen Schlag ausführt, und wonach in oder entgegen dem Uhrzeigersinn ein weiteres Aktuatorpaar gegen das freie Ende schlägt. Die Schlagabfolge kann grundsätzlich beliebig sein.

Es kann auch vorgesehen sein, dass die Aktuatoren mehrfach gegen das freie Ende des Kabelabschnitts schlagen, beispielsweise jeder Aktuator zweimal, dreimal, viermal oder noch öfter.

Es kann vorgesehen sein, den zu bearbeitenden Kabelabschnitt während dem verdrehen und/oder verbiegen an einer der Haltepositionen oder an einer sonstigen Position entlang der Kabelmittelachse zu fixieren, insbesondere mittels einer Halteeinrichtung.

In einer Ausgestaltung der Erfindung kann vorgesehen sein, dass als Kabelfolie eine Verbundfolie aus wenigstens zwei Einzelschichten verwendet wird, wobei die Innenschicht aus wenigstens einer der Einzelschichten und die Außenschicht aus der oder den weiteren Einzelschichten gebildet ist, und wobei die Innenschicht vorzugsweise eine höhere mechanische Brüchigkeit (d. h. eine höhere Tendenz unter mechanischem Einfluss zu brechen) aufweist, als die Außenschicht.

Als Verbundfolie können beispielsweise metallisierte Kunststofffolien oder auch mehrere übereinander angeordnete Einzelfolien verstanden werden.

Das erfindungsgemäße Verfahren umfasst somit auch eine Verwendung einer geeigneten Kabelfolie für ein zu bearbeitendes elektrisches Kabel.

Durch die Art der verwendeten Kabelfolie kann das erfindungsgemäße Verfahren somit optimal auf das elektrische Kabel abgestimmt sein. Grundsätzlich kann aber ein beliebiges elektrisches Kabel mit einer beliebigen Kabelfolie vorgesehen sein.

Es kann insbesondere eine Kabelfolie in Form einer Verbundfolie aus zwei, drei, vier, fünf oder mehr Einzelschichten verwendet werden.

Ferner kann eine Kabelfolie aber auch aus einem einzigen Grundmaterial bestehen. Es kann z. B. eine durchgängige Polyesterfolie, PET-Folie oder Metallfolie (beispielsweise Aluminiumfolie oder Kupferfolie) vorgesehen sein. Bei einer Kabelfolie aus einem einzigen Grundmaterial kann die Außenschicht einen ersten Teil der Foliendicke und die Innenschicht einen zweiten Teil der Foliendicke umfassen. Die Au-ßenschicht kann aber auch das komplette Material umfassen. Die Kabelfolie muss nicht unbedingt eine Innenschicht aufweisen.

Vorzugsweise wird als Kabelfolie eine Verbundfolie aus zwei Einzelschichten verwendet, wobei die Innenschicht aus der Einzelschicht mit höherer mechanischer Brüchigkeit und die Außenschicht aus der Einzelschicht mit geringerer mechanischer Brüchigkeit ausgebildet ist. Demnach kann vorgesehen sein, dass die Innenschicht der Kabelfolie unter mechanischer Beanspruchung leichter bricht, als die Außenschicht der Kabelfolie.

In einer Ausgestaltung kann insbesondere vorgesehen sein, dass eine Verbundfolie aus einem Kunststoff, vorzugsweise PET (Polyethylenterephthalat), und einem Metall, vorzugsweise Aluminium, verwendet wird, wobei die Außenschicht durch eine Einzelschicht aus dem Kunststoff und die Innenschicht aus einer weiteren Einzelschicht aus dem Metall gebildet ist.

Eine derart ausgebildete Kabelfolie kann somit eine brüchige Innenschicht aufweisen (beispielsweise eine Kupfer- oder Aluminiumschicht) und eine mechanisch strapazierbare Kunststoff-Außenschicht (z. B. PET). Das erfindungsgemäße Verfahren ist für derartige Verbundfolien, die bei elektrischen Kabeln häufig Verwendung finden, besonders vorteilhaft und effektiv, da vorzugsweise die strapazierfähige Außenschicht durch eine oder mehrere Varianten des Verfahrens entfernt oder zumindest so manipuliert werden kann, dass diese brüchig wird. Da die Innenschicht einer derartigen Verbundfolie ohne die schützende Außenschicht empfindlich gegenüber mechanischen Belastungen ist, kann die Kabelfolie nach Entfernung der Außenschicht an der vorgesehenen Rissposition und dem erfindungsgemäßen Stauchen anschließend leicht entfernt werden.

In einer Weiterbildung der Erfindung kann vorgesehen sein, dass das dritte Modul das Kabelfolienstück von dem Kabel entfernt, indem das Kabelfolienstück abgebürstet, abgeblasen, abgewickelt, abgestreift und/oder zusammen mit dem Mantelstück abgezogen wird.

Insbesondere für eine automatisierte Entfernung der Kabelfolie kann es von Vorteil sein, die Kabelfolie zusammen mit dem Kabelmantel abzuziehen. Hierfür kann vorgesehen sein, dass beispielsweise bei einem zu bearbeitenden Kabelabschnitt in Form eines Kabelendstücks der Kabelmantel im Rahmen der Bearbeitung durch das erste Modul ringförmig umlaufend eingeschnitten und im Wesentlichen im Bereich der vorgesehenen Rissposition entlang der Kabelmittelachse längs von dem Kabel abgezogen wird, um die Kabelfolie im Bereich der vorgesehenen Rissposition freizulegen. Anschließend kann die Kabelfolie in dem zweiten Modul vorbehandelt werden, um deren mechanische Belastbarkeit zu reduzieren. Anschließend kann die Kabelfolie optional in dem dritten Modul gestaucht werden, wie nachfolgend noch beschrieben wird, wonach der Kabelmantel vollständig in Längsrichtung bzw. längs entlang der Kabelmittelachse von dem elektrischen Kabel abgezogen wird.

Zum Abziehen des Mantelstücks und/oder des Kabelfolienstücks von dem zu bearbeitenden Kabelabschnitt bzw. von dem Kabel kann die Schneideinrichtung verwendet werden, die zuvor für den Teilabzug des Kabelmantels verwendet wurde, insbesondere eines oder mehrere Abisoliermesser, die radial in Richtung auf die Kabelmittelachse zugestellt werden und das Mantelstück und/oder das Kabelfolienstück anschließend axial abziehen, beispielsweise indem eine separate Zustelleinrichtung das Kabel entgegen der Zustellrichtung aus der Vorrichtung bei teilgeschlossener Schneideinrichtung herauszieht.

Es können grundsätzlich auch mehrere Kabelfolien innerhalb eines elektrischen Kabels vorgesehen sein, beispielsweise kann eine erste Kabelfolie zwischen Kabelmantel und Kabelschirmgeflecht und eine zweite Kabelfolie zwischen Dielektrikum bzw. einem Isolator und Innenleiter vorgesehen sein. Die Erfindung kann auch zum Entfernen mehrerer Kabelfolien bzw. Kabelfolienstücke aus einem elektrischen Kabel verwendet werden.

Eine Ausgestaltung der Erfindung betrifft auch einen Verfahrensablauf zum Entfernen einer Kabelfolie von einem zu bearbeitenden Kabelabschnitt eines elektrischen Kabels, wobei die Kabelfolie in dem zu bearbeitenden Kabelabschnitt zumindest teilweise freigelegt wird, wonach im Bereich des zu bearbeitenden Kabelabschnitts wenigstens ein ringförmig um die Kabelfolie umlaufender Riss in die Kabelfolie eingebracht wird, wonach die Kabelfolie gestaucht und anschließend von dem zu bearbeitenden Kabelabschnitt entfernt wird. Dabei ist vorgesehen, dass zum Einbringen des ringförmig umlaufenden Risses zumindest die folgenden Schritte vorgesehen sind:
- Vorbearbeiten wenigstens einer der Kabelmittelachse abgewandten Außenschicht der Kabelfolie zumindest im Bereich einer wenigstens teilringförmig umlaufenden vorgesehenen Rissposition, wobei die mechanische Belastbarkeit der Außenschicht im Bereich der vorgesehenen Rissposition durch die Vorbehandlung zumindest reduziert wird;
- Verdrehen und/oder Verbiegen des zu bearbeitenden Kabelabschnitts derart, dass eine unterhalb der vorbehandelten Außenschicht befindliche Innenschicht der Kabelfolie teilringförmig oder ringförmig umlaufend einreißt.

In einer vorteilhaften Weiterbildung der Erfindung kann vorgesehen sein, dass das dritte Modul das Kabelfolienstück in Axialrichtung entlang der Kabelmittelachse staucht, bevor das Kabelfolienstück von dem Kabel entfernt wird.

Der Erfinder hat vorliegend erkannt, dass ein Abziehen der Kabelfolie von dem Kabel in Axialrichtung insbesondere für lange zu entfernende Abschnitte der Kabelfolie oder im Falle von Kabeln mit großem Durchmesser vereinfacht werden kann, wenn die Kabelfolie zuvor gestaucht wird, vorzugsweise entgegen der Abziehrichtung.

Durch das Stauchen der Kabelfolie kann die Kabelfolie auf dem Kabel zunächst gelockert werden, was ein anschließendes Abziehen vereinfachen kann. Beispielsweise kann eine stoffschlüssige oder adhäsive Verbindung zwischen der Kabelfolie und den darunterliegenden Strukturen, beispielsweise einem Kabelschirmgeflecht oder einem elektrischen Isolator, zumindest teilweise gelöst oder gelockert werden.

Durch das Stauchen der Kabelfolie kann diese außerdem aufgelockert und dadurch vermieden werden, dass sich eine gewickelte Kabelfolie bei einem Abziehen radial weiter zuzieht und ein bestehender Kraftschluss der Kabelfolie an dem Kabel mit steigernder Zugkraft gleichermaßen zunimmt und dem Abziehen entgegenwirkt.

Vorzugsweise wird entgegen die Wickelrichtung der Kabelfolie gestaucht.

In einer Weiterbildung der Erfindung kann vorgesehen sein, dass das dritte Modul das Kabelfolienstück mittelbar staucht, indem das das Kabelfolienstück umhüllende Mantelstück gestaucht wird.

In diesem Falle kann der Mantel die Kabelfolie stauchen, insbesondere über einen entlang der Axialrichtung verlaufenden länglichen Abschnitt.

Insbesondere wenn eine Verbundfolie aus einem Kunststoff als Außenschicht und einem Metall als Innenschicht vorgesehen ist, ist zu erwarten, dass die Kabelfolie stärker an dem Kabelmantel haftet, als an beispielsweise einem innenliegenden Kabelschirmgeflecht. Demnach kann die Kabelfolie vorteilhaft mittels Stauchung des Kabelmantels gestaucht werden und anschließend über das innenliegende Kabelschirmgeflecht oder einen Innenleiter gleiten, während sie mit dem Kabelmantel abgezogen wird.

Grundsätzlich kann die (zuvor freigelegte) Kabelfolie auch unmittelbar gestaucht werden. Durch das mittelbare Stauchen der Kabelfolie unter Verwendung eines umhüllenden Mantels kann sich allerdings ein noch besseres Ergebnis erzielen lassen, da die radial eingeschränkte Beweglichkeit der Kabelfolie eine gezieltere Stauchung entlang der Axialrichtung ermöglichen kann.

In einer Ausgestaltung kann als die Kabelfolie umhüllender Mantel ein Kabelmantel des Kabels oder ein sich in Axialrichtung erstreckendes Greifmittel oder eine auf die zumindest teilweise freigelegte Kabelfolie aufgebrachte Hülle verwendet werden.

Vorzugsweise handelt es sich bei dem die Kabelfolie umhüllenden Mantel um den Kabelmantel. Es kann sich allerdings auch um ein Kabelschirmgeflecht oder um eine dielektrische Abschirmung bzw. eine elektrisch isolierende Abschirmung handeln. Vorteilhaft können somit bereits vorhandenen Mantelstrukturen zur mittelbaren Stauchung der Kabelfolie verwendet werden.

Es kann aber auch vorgesehen sein, dass eine Hülle auf eine zuvor freigelegte Kabelfolie aufgebracht wird, um durch das Stauchen der Hülle mittelbar die Kabelfolie zu stauchen. Vorzugsweise erstreckt sich die Hülle in Axialrichtung entlang eines zu entfernenden Abschnitts der Kabelfolie, besonders bevorzugt über den gesamten Abschnitt der Kabelfolie, der entfernt werden soll.

Bei der Hülle kann es sich um eine längliche Hülle, beispielsweise um einen flexiblen Hohlkörper, z. B. einen Schlauch handeln. Die Hülle kann ausgebildet sein, um sich kraftschlüssig zumindest teilringförmig, vorzugsweise vollständig umlaufend um die Kabelfolie zu legen. Die Hülle kann beispielsweise axial geschlitzt sein, um durch ein elastisches Aufbiegen auf die Kabelfolie aufgebracht zu werden. Bei der Hülle kann es sich auch um eine Hülse, insbesondere um einen nicht elastischen Hohlkörper handeln.

Es kann auch ein Greifmittel vorgesehen sein, um den Mantel auszubilden. Bei dem Greifmittel kann es sich insbesondere um einen Bestandteil der nachfolgend noch beschriebenen Halteeinrichtungen und/oder Fixiereinrichtungen handeln, die das Kabel, den Kabelmantel oder die Kabelfolie umgreifen.

In einer Weiterbildung der Erfindung kann vorgesehen sein, dass das dritte Modul das Kabelfolienstück staucht, indem das Mantelstück an einer ersten Halteposition gehalten wird und wobei der Mantel des Kabels an einer von der ersten Halteposition in Axialrichtung beabstandeten, ersten Fixierposition gehalten wird, wonach die erste Halteposition und die erste Fixierposition relativ aufeinander zubewegt werden.

Vorzugsweise befindet sich die erste Fixierposition außerhalb des zu bearbeitenden Kabelabschnitts.

Beispielsweise kann sich die erste Halteposition (und/oder die nachfolgend noch beschriebenen, weiteren Haltepositionen) auf einem abgetrennten, vorderen Abschnitts des Kabelmantels (Mantelstück, Abisolierstück) und die erste Fixierposition auf dem Abschnitt des Kabelmantels bzw. des Kabels befinden, der im Rahmen der Erfindung nicht bearbeitet wird.

Es kann von Vorteil sein, die erste Halteposition (oder eine nachfolgend noch beschriebene, weitere Halteposition) von einem freigelegten Abschnitt der Kabelfolie in Axialrichtung zu beabstanden. Wenn die Halteposition zu nah an dem freigelegten Abschnitt bzw. an dem geöffneten Kabelmantel angeordnet ist, kann das Stauchen dazu führen, dass der Kabelmantel wieder über die Kabelfolie entgegen der Zustellrichtung des Kabels zurückgeschoben wird. Durch einen entsprechenden Abstand der Halteposition(en) von dem freigelegten Abschnitt der Kabelfolie kann dieses Problem zumindest reduziert werden. Der einzuhaltende Abstand kann beispielsweise zumindest 10 cm betragen, vorzugsweise zumindest 5 cm, besonders bevorzugt zumindest 1 cm. Vorzugsweise wird der einzuhaltende Abstand derart gewählt, dass der freigelegte Abschnitt der Kabelfolie durch ein Verschieben des Kabelmantels nicht wieder vollständig geschlossen wird. Besonders bevorzugt sollte der Kabelmantel durch die stauchende Bewegung nicht so weit verschoben werden, dass sich die abgetrennten Enden des Kabelmantels berühren und das Kabelmantelstück, das auf dem Kabel verbleiben soll, entgegen der Zustellrichtung auf dem Kabel verschoben wird, da dies die Abisolierlänge beeinflussen kann.

In einer Weiterbildung kann vorgesehen sein, dass die erste Halteposition und die erste Fixierposition relativ aufeinander zubewegt werden, indem die erste Fixierposition auf die erste Halteposition zugestellt wird. Die Halteposition kann in diesem Falle unbeweglich gehalten werden.

In einer Weiterbildung kann auch vorgesehen sein, dass die erste Halteposition und die erste Fixierposition relativ aufeinander zubewegt werden, indem die erste Halteposition auf die erste Fixierposition zugestellt wird. Die Fixierposition kann in diesem Falle unbeweglich gehalten werden.

Auch eine Kombination, also eine beiderseitige Zustellung ist möglich.

In einer Weiterbildung kann außerdem vorgesehen sein, dass das dritte Modul das Kabelfolienstück sequentiell in mehreren Abschnitten entlang der Kabelmittelachse staucht.

Insbesondere bei vergleichsweise langen zu bearbeitenden Kabelabschnitten bzw. langen zu entfernenden Abschnitten der Kabelfolie kann eine abschnittsweise Stauchung vorteilhaft sein.

Die Stauchung kann vorzugsweise in zeitlich versetzter Abfolge nacheinander erfolgen. Insbesondere kann vorgesehen sein, zunächst einen ersten Abschnitt zu stauchen, der dem freien Ende des Kabels bzw. des zu bearbeitenden Abschnitts des Kabels am nächsten gelegen ist, gefolgt von einem Abschnitt, der dem ersten Abschnitt entgegen der Zustellrichtung des Kabels in Axialrichtung nachgeordnet ist. Auch eine umgekehrte Reihenfolge bei der Stauchung in mehreren Abschnitten oder eine chaotische Reihenfolge kann vorgesehen sein.

In einer Ausgestaltung kann insbesondere vorgesehen sein, dass die Kabelfolie in zwei, drei, vier, fünf oder mehr Abschnitten gestaucht wird.

Die Anzahl zu stauchender Abschnitte kann der Fachmann in Abhängigkeit der Länge des zu bearbeitenden Kabels treffen. Beispielsweise kann vorgesehen sein, die Kabelfolie in Abschnitten zu stauchen, die sich entlang der Axialrichtung über einen Bereich von 2 cm oder mehr erstrecken, über einen Bereich von 3 cm oder mehr erstrecken, über einen Bereich von 4 cm oder mehr erstrecken, über einen Bereich von 5 cm oder mehr erstrecken oder über einen Bereich von 10 cm oder mehr erstrecken.

In einer Ausgestaltung kann vorgesehen sein, dass entlang der Kabelmittelachse verschiedene, in Axialrichtung beabstandete Haltepositionen und/oder Fixierpositionen verwendet werden, wobei die zu stauchenden Abschnitte zwischen jeweils aus einer Halteposition und einer Fixierposition gebildeten Haltepaaren verlaufen, wonach sequentiell für alle gebildeten Haltepaare deren Halteposition und Fixierposition relativ aufeinander zubewegt werden.

Ein erstes Fixierpaar kann beispielsweise aus der ersten Halteposition und der ersten Fixierposition gebildet sein. Ein zweites Fixierpaar kann beispielsweise aus der zweiten Halteposition und der zweiten Fixierposition gebildet sein. Ein drittes Fixierpaar kann beispielsweise aus der dritten Halteposition und der dritten Fixierposition gebildet sein. Ein viertes Fixierpaar kann beispielsweise aus der vierten Halteposition und der vierten Fixierposition gebildet sein. Ein fünftes Fixierpaar kann beispielsweise aus der fünften Halteposition und der fünften Fixierposition gebildet sein.

Es kann vorgesehen sein, dass die erste Halteposition dem freien Ende des Kabel bzw. des zu bearbeitenden Kabelabschnitts am nächsten gelegen ist, wobei die zweite Halteposition entgegen der Zustellrichtung des Kabels in Axialrichtung der ersten Halteposition nachgeordnet ist; dies kann sich für optional vorhandene, weitere Haltepositionen fortsetzen. Die Anordnung bzw. Reihenfolge kann sich gleicherma-ßen für die Fixierpositionen ergeben.

In einer bevorzugten Ausgestaltung kann allerdings vorgesehen sein, dass die erste Fixierposition verwendet wird, um mit mehreren Haltepositionen entsprechende Paare zu bilden, und wobei die erste Fixierposition sequentiell auf die jeweiligen Haltepositionen zugestellt wird, während die Haltepositionen unverändert bleiben.

Vorzugsweise wird nur eine erste Fixierposition verwendet, die jeweilige Fixierpaare mit mehreren Haltepositionen bildet. Ein Umgreifen kann damit insbesondere hinsichtlich einer Fixiereinrichtung vermieden werden.

Ein erstes Fixierpaar kann dann beispielsweise aus der ersten Halteposition und der ersten Fixierposition gebildet sein. Ein zweites Fixierpaar kann dann beispielsweise aus der zweiten Halteposition und der ersten Fixierposition gebildet sein. Ein drittes Fixierpaar kann dann beispielsweise aus der dritten Halteposition und der ersten Fixierposition gebildet sein. Ein viertes Fixierpaar kann dann beispielsweise aus der vierten Halteposition und der ersten Fixierposition gebildet sein. Ein fünftes Fixierpaar kann dann beispielsweise aus der fünften Halteposition und der ersten Fixierposition gebildet sein.

Es kann auch vorgesehen sein, dass die erste Halteposition verwendet wird, um mit mehreren Fixierpositionen entsprechende Paare zu bilden, und wobei die erste Halteposition sequentiell auf die jeweiligen Fixierpositionen zugestellt wird, während die Fixierpositionen unverändert bleiben.

In einer Ausgestaltung der Erfindung kann vorgesehen sein, dass der Mantel mittels einer Schneideinrichtung und/oder mittels eines Formwerkzeugs an der wenigstens einen Halteposition und/oder an der wenigstens einen Fixierposition gehalten wird.

Beispielsweise kann die zum Abisolieren des Mantels vorgesehene Schneideinrichtung verwendet werden, um durch ein teilweises Einschneiden des Mantels an der Halteposition und/oder an der Fixierposition das Kabel bzw. den (Kabel)Mantel sicher zu greifen. Es kann aber auch eine rein kraftschlüssige Fixierung des Kabels oder Mantels an der oder den Haltepositionen bzw. der oder den Fixierpositionen vorgesehen sein.

Es kann auch vorgesehen sein, das Kabel bzw. den Mantel mittels eines Formwerkzeugs kraftschlüssig an der oder den Haltepositionen und/oder der oder den Fixierpositionen zu greifen. Bei dem Formwerkzeug kann es sich insbesondere um ein im Rahmen der Kabelbearbeitung bereits anderweitig verwendetes Werkzeug handeln, beispielsweise um eine oder mehrere stumpfe Klingen zum Erhitzen bzw. Schmelzen der Kabelfolie, wie nachfolgend noch beschrieben.

In einer Ausgestaltung kann vorgesehen sein, dass die Fixiereinrichtung entlang einer Zustellrichtung für das zu bearbeitende Kabel auf die Halteeinrichtung zustellbar ist, um die Kabelfolie zu stauchen.

Es kann allerdings auch vorgesehen sein, dass die Halteeinrichtung entgegen einer Zustellrichtung für das zu bearbeitende Kabel auf die Fixiereinrichtung zustellbar ist, um die Kabelfolie zu stauchen.

Auch eine gleichzeitige Zustellung der Fixiereinrichtung an die Halteeinrichtung und der Halteeinrichtung an die Fixiereinrichtung kann vorgesehen sein.

Bei der Zustellrichtung handelt es sich um die Richtung, entlang der das Kabel, beispielsweise ausgehend von einer Kabeltrommel, mit seinem freien Ende bzw. mit dem zu bearbeitenden Kabelabschnitt in die Vorrichtung zustellbar ist.

In einer Ausgestaltung kann vorgesehen sein, dass die Halteeinrichtung und/oder die Fixiereinrichtung ausgebildet ist, um mehrere in Axialrichtung voneinander beabstandete Positionen anzufahren, um den Mantel zu halten und durch eine relative Zustellbewegung der Halteeinrichtung auf die Fixiereinrichtung die Kabelfolie mittelbar zu stauchen.

Vorzugsweise ist die Halteeinrichtung als Abisoliermesser, Formwerkzeug oder sonstige radial an das Kabel zustellbare Einrichtung ausgebildet.

Das erfindungsgemäße Verfahren eignet sich besonders vorteilhaft zur Verwendung mit einer Vorrichtung zum Bearbeiten eines elektrischen Kabels, da das erfindungsgemäße Verfahren eine technisch einfach umzusetzende Möglichkeit offenbart, die Kabelfolie ohne Beschädigung weiterer Komponenten des Kabels von dem elektrischen Kabel zu entfernen.

Die Erfindung betrifft auch ein Computerprogrammprodukt mit Programmcodemitteln, um ein Verfahren gemäß den vorstehend und nachfolgenden Ausführungen durchzuführen, wenn das Programm auf einer Steuereinheit einer Vorrichtung zur Bearbeitung eines Kabels ausgeführt wird.

Die Steuereinheit kann als Mikroprozessor ausgebildet sein. Anstelle eines Mikroprozessors kann auch eine beliebige weitere Einrichtung zur Implementierung der Steuereinheit und/oder Steuereinrichtung vorgesehen sein, beispielsweise eine oder mehrere Anordnungen diskreter elektrischer Bauteile auf einer Leiterplatte, eine speicherprogrammierbare Steuerung (SPS), eine anwendungsspezifische integrierte Schaltung (ASIC) oder eine sonstige programmierbare Schaltung, beispielsweise auch ein Field Programmable Gate Array (FPGA), eine programmierbare logische Anordnung (PLA) und/oder ein handelsüblicher Computer.

Die Erfindung betrifft auch ein elektrisches Kabel, bearbeitet nach einem Verfahren gemäß den vorstehenden und nachfolgenden Ausführungen.

Die Erfindung betrifft außerdem ein elektrisches Kabel, das mit einer Vorrichtung gemäß den vorstehenden und nachfolgenden Ausführungen bearbeitet wurde.

Ferner betrifft die Erfindung eine Verwendung einer Baugruppe von voneinander unabhängigen Modulen zur Entfernung eines Mantelstücks und eines Kabelfolienstücks von einem einen Mantel und eine darunterliegende Kabelfolie aufweisenden elektrischen Kabel. Dabei ist vorgesehen, dass ein erstes Modul der Baugruppe verwendet wird, um das Mantelstück von dem Kabel abzutrennen, und wobei ein zweites Modul der Baugruppe verwendet wird, um die mechanische Belastbarkeit der Kabelfolie in einer vorgesehenen Rissposition zu reduzieren, und wobei ein drittes Modul der Baugruppe verwendet wird, um das Mantelstück und das Kabelfolienstück automatisiert von dem Kabel zu entfernen.

Merkmale, die bereits im Zusammenhang mit der erfindungsgemäßen Vorrichtung beschrieben wurden, sind selbstverständlich auch für das erfindungsgemäße Verfahren, das System, das Computerprogrammprodukt, das elektrische Kabel und die Verwendung vorteilhaft umsetzbar - und umgekehrt. Ferner können Vorteile, die bereits im Zusammenhang mit der erfindungsgemäßen Vorrichtung genannt wurden, auch auf das erfindungsgemäße Verfahren, das System, das Computerprogrammprodukt, das elektrische Kabel oder die Verwendung bezogen verstanden werden - und umgekehrt.

Die beschriebenen Merkmale der Module der Baugruppe können außerdem untereinander austauschbar sein.

Es kann außerdem vorgesehen sein, ein einzelnes Modul in weitere Untermodule aufzuteilen, um die Kabelbearbeitung noch modularer zu gestalten. Beispielsweise kann das erste Modul in ein erstes Untermodul und ein zweites Untermodul aufgeteilt werden, wobei das erste Untermodul das Mantelstück abtrennt und das zweite Untermodul einen Teilabzug durchführt.

Die Erfindung kann außerdem auch eine Steuereinheit einer Vorrichtung zur Bearbeitung eines Kabels betreffen, die eingerichtet ist, um ein Computerprogrammprodukt mit Programmcodemitteln auszuführen, um ein Verfahren gemäß den vorstehend und nachfolgenden Ausführungen durchzuführen.

Ergänzend sei darauf hingewiesen, dass die Begriffe, wie "umfassend", "aufweisen" oder "mit", keine anderen Merkmale oder Schritte ausschließen. Ferner schließen Begriffe, wie "ein" oder "das", die auf eine Einzahl von Schritten oder Merkmalen hinweisen, keine Mehrzahl von Schritten oder Merkmalen aus.

Nachfolgend werden Ausführungsbeispiele der Erfindung anhand der Zeichnung näher beschrieben.

Die Figuren zeigen jeweils bevorzugte Ausführungsbeispiele, in denen einzelne Merkmale der vorliegenden Erfindung in Kombination miteinander dargestellt sind. Merkmale eines Ausführungsbeispiels sind auch losgelöst von den anderen Merkmalen des gleichen Ausführungsbeispiels umsetzbar und können dementsprechend von einem Fachmann ohne Weiteres zu weiteren sinnvollen Kombinationen und Unterkombinationen mit Merkmalen anderer Ausführungsbeispiele verbunden werden.

In den Figuren sind funktionsgleiche Elemente mit demselben Bezugszeichen versehen.

Es zeigen schematisch:
- Fig. 1: einen Querschnitt eines elektrischen Koaxialkabels mit einem Innenleiter, einem Kabelschirmgeflecht und einer Kabelfolie;
- Fig. 2: einen Querschnitt eines elektrischen Kabels mit vier Innenleitern, einem Kabelschirmgeflecht und einer Kabelfolie;
- Fig. 3: einen Querschnitt eines elektrischen Kabels mit zwei Innenleitern, einem Kabelschirmgeflecht und einer Kabelfolie;
- Fig. 4: eine isometrische Darstellung eines elektrischen Kabels gemäß Fig. 1 mit ringförmig umlaufend eingeschnittenem Kabelmantel;
- Fig. 5: eine isometrische Darstellung des elektrischen Kabels gemäß Fig. 4 mit teilweise abgezogenem Kabelmantel und freigelegter Kabelfolie;
- Fig. 6: das elektrische Kabel gemäß Fig. 5 nach einer teilringförmigen Vorbearbeitung der Kabelfolie zur Reduzierung deren mechanischer Belastbarkeit;
- Fig. 7: das elektrische Kabel gemäß Fig. 6 während des Verbiegens des zu bearbeitenden Kabelabschnitts;
- Fig. 8: das elektrische Kabel gemäß Fig. 7 während des erfindungsgemäßen Stauchens;
- Fig. 9: das elektrische Kabel gemäß Fig. 8 während des Abziehens der Kabelfolie zusammen mit dem Kabelmantel;
- Fig. 10: das elektrische Kabel gemäß Fig. 9 mit einem umgestülpten Kabelschirmgeflecht;
- Fig. 11: die Verwendung von vier Aktuatoren zum Verbiegen des zu bearbeitenden Kabelabschnitts;
- Fig. 12: die Verwendung einer Rotationseinrichtung bzw. eines Exzenters zum Verdrehen bzw. Verbiegen des zu bearbeitenden Kabelabschnitts;
- Fig. 13: die Verwendung von zwei beheizten Formwerkzeugen zur thermischen Behandlung der Kabelfolie;
- Fig. 14: ein weiteres Beispiel der Verwendung von zwei beheizten Formwerkzeugen zur thermischen Behandlung der Kabelfolie;
- Fig. 15: die Verwendung eines Heizdrahts zur thermischen Behandlung der Kabelfolie;
- Fig. 16: die Verwendung einer Zuführeinrichtung für chemische Stoffe für die Behandlung der Kabelfolie;
- Fig. 17: die Verwendung einer Abziehhilfe für die Behandlung der Kabelfolie;
- Fig. 18: die Verwendung einer Drahtbürste zur Behandlung der Kabelfolie;
- Fig. 19: die Verwendung eines Rundmessers zur Behandlung der Kabelfolie;
- Fig. 20: eine isometrische Darstellung eines elektrischen Kabels gemäß Fig. 1 während des Entfernens des Kabelmantels in Form eines Kabelfensters;
- Fig. 21: das elektrische Kabel gemäß Fig. 20 mit einer freigelegten und behandelten Kabelfolie in einem fensterförmigen Kabelabschnitt;
- Fig. 22: eine Vorrichtung zum automatisierten Entfernen einer Kabelfolie von einem zu bearbeitenden Kabelabschnitt eines elektrischen Kabels;
- Fig. 23: eine prinzipmäßige Verwendung einer Vorrichtung zum automatisierten Entfernen einer Kabelfolie von einem zu bearbeitenden Kabelabschnitt eines elektrischen Kabels für ein erfindungsgemäßes Stauchen der Kabelfolie;
- Fig. 24: eine Vorrichtung zur Bearbeitung eines elektrischen Kabels, umfassend eine Baugruppe von voneinander unabhängigen Modulen und eine Transporteinrichtung; und
- Fig. 25: ein System zum Konfektionieren von elektrischen Kabeln.

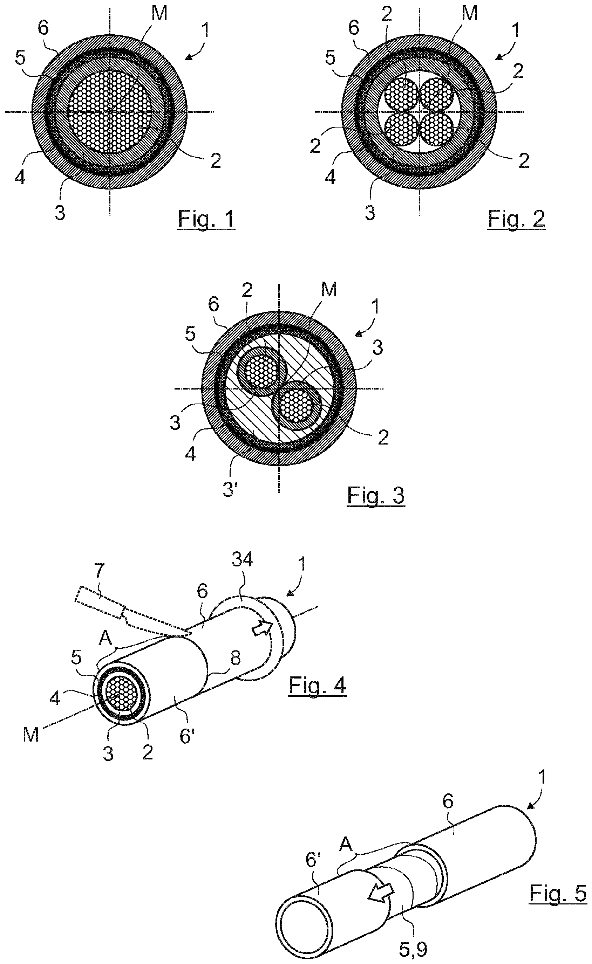

In Fig. 1 ist ein elektrisches Kabel 1 im Querschnitt dargestellt, an dem das erfindungsgemäße Verfahren vorteilhaft angewendet werden kann. Das rein beispielhaft und bezüglich der Größenverhältnisse stark schematisiert dargestellte elektrische Kabel 1 ist ein Koaxialkabel mit einem Innenleiter 2, der durch einen Isolator/Dielektrikum bzw. Isolationswerkstoff 3 von einem Kabelschirmgeflecht bzw. Außenleiter 4 elektrisch isoliert ist. Bei dem Isolationswerkstoff 3 kann es sich beispielsweise um Silikonkautschuk handeln. Um das Kabelschirmgeflecht 4 ist eine Kabelfolie 5 angeordnet. Schließlich ist das elektrische Kabel 1 von einem Kabelmantel 6 umgeben. Alle Komponenten des elektrischen Kabels 1 sind koaxial zu einer gemeinsamen Kabelmittelachse M angeordnet. Das Kabelschirmgeflecht 4 erfüllt vorliegend die Aufgabe der elektromagnetischen Abschirmung und des elektrischen Rückleiters und kann beispielsweise aus Kupfer mit einer am Außenumfang aufgebrachten schützenden Zinnschicht ("Ziehhaut") aufgebaut sein.

Grundsätzlich kann die Erfindung für beliebig aufgebaute Kabel verwendbar sein, insbesondere auch für ein Kabel, bei dem das Kabelschirmgeflecht bzw. der Außenleiter 4 unmittelbar unter dem Kabelmantel 6 und unmittelbar über der Kabelfolie 5 angeordnet ist. Unter der Kabelfolie 5 kann dann z. B. direkt der Isolationswerkstoff 3 folgen.

Je nach Aufbau der Kabelfolie 5 kann die Kabelfolie 5 die elektromagnetische Abschirmung noch verbessern, die mechanische Stabilität und/oder Dichtigkeit, insbesondere gegen Feuchtigkeit, gewährleisten und ein Verkeilen des Kabelmantels 6 an dem Kabelschirmgeflecht 4 bzw. an den Einzellitzen des Kabelschirmgeflechts 4 verhindern, wodurch gegebenenfalls ein Abstreifen des Kabelmantels 6 von dem Kabelschirmgeflecht 4 beim Abisolieren überhaupt erst möglich werden kann.

Es ist bekannt, dass eine derartige Kabelfolie 5, die grundsätzlich an einer beliebigen Stelle innerhalb des Kabels 1 angeordnet sein kann, beispielsweise auch zwischen Kabelschirmgeflecht 4 und Isolationswerkstoff 3 oder zwischen Isolationswerkstoff 3 und Innenleiter 2, nur manuell und auch nur unter hohem Aufwand im Zuge einer Kabelkonfektionierung entfernt werden kann. Der Grund hierfür ist die gewollte hohe mechanische Belastbarkeit der Kabelfolie 5.

Grundsätzlich können auch mehrere Kabelfolien 5 innerhalb des elektrischen Kabels 1 vorgesehen sein, beispielsweise kann eine weitere Kabelfolie 5 zwischen Isolationswerkstoff 3 und Innenleiter 2 vorgesehen sein (im Ausführungsbeispiel nicht der Fall). Die Erfindung kann somit auch zum Entfernen mehrerer Kabelfolien 5 aus einem elektrischen Kabel 1 verwendet werden.

Das in Fig. 1 dargestellte elektrische Kabel 1 ist lediglich eines einer Vielzahl elektrischer Kabel 1, deren Kabelfolie(n) 5 unter Verwendung des erfindungsgemäßen Verfahrens entfernt werden kann/können. Als weiteres Beispiel sollen die Figuren 2 und 3 dienen. Grundsätzlich ist die Erfindung aber selbstverständlich nicht auf die Verwendung mit einer bestimmten Art Kabel 1 beschränkt zu verstehen.

Fig. 2 zeigt ein im Wesentlichen mit Fig. 1 identisches Kabel 1. Dieses weist allerdings vier Innenleiter 2 auf, die jeweils voneinander elektrisch isoliert sind (zur Vereinfachung nicht dargestellt). Die Erfindung ist somit insbesondere nicht auf die Verwendung eines Kabels 1 mit einer bestimmten Anzahl Innenleiter 2 beschränkt zu verstehen. Die Erfindung ist ferner nicht auf ein Kabel 1 beschränkt zu verstehen, bei dem Isolationswerkstoff 3 und/oder Kabelschirmgeflecht 4 überhaupt vorliegen. Die Erfindung kann beispielsweise auch zum Entfernen der Kabelfolie 5 eines elektrischen Kabels 1, das lediglich einen oder mehrere Innenleiter 2 in Form von Litzen aufweist, die jeweils oder gemeinsam von einer Kabelfolie 5 umgeben sind, verwendet werden.

Fig. 3 zeigt beispielhaft ein weiteres elektrisches Kabel 1, das erfindungsgemäß bearbeitet werden kann. Das dargestellte elektrische Kabel 1 eignet sich besonders als Kabel 1 zur Verwendung mit elektrischen Fahrzeugantrieben. Das Kabel 1 weist zwei Innenleiter 2 auf, die jeweils von dem Isolationswerkstoff 3 umgeben sind. Damit sich für das Kabel 1 ein möglichst runder Gesamtquerschnitt einstellt, sind die beiden separat isolierten Innenleiter 2 von einem Füllmaterial 3' ("Filler") umgeben. Auf dem Füllmaterial 3' verläuft das Kabelschirmgeflecht 4, das von der Kabelfolie 5 umhüllt ist. Schließlich ist auch für das Kabel 1 der Fig. 3 ein Kabelmantel 6 vorgesehen, der die Kabelfolie 5 umhüllt.

In den Figuren 4 bis 9 ist eine Kabelbearbeitung mit erfindungsgemäßen Verfahrensschritten beispielhaft aufgezeigt.

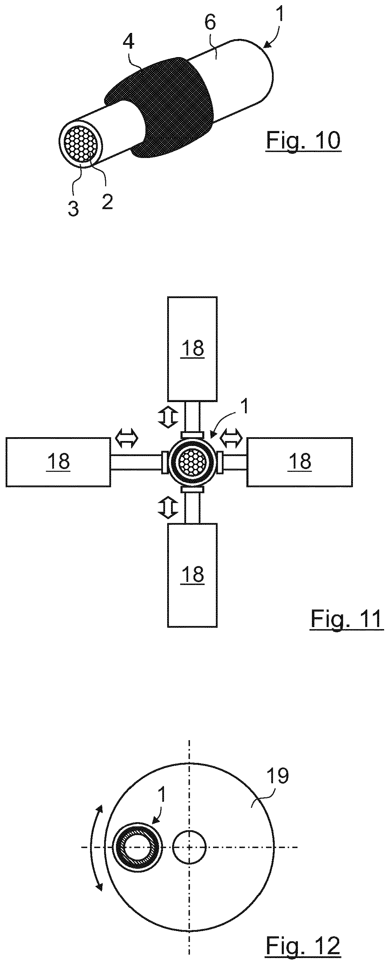

Fig. 10 zeigt einen weiterführenden, optionalen Schritt, um das Kabelschirmgeflecht 4 umzustülpen. Insofern das Kabelschirmgeflecht 4 direkt unter dem Kabelmantel 6 und über der Kabelfolie 5 angeordnet ist, kann das Umstülpen des Kabelschirmgeflechts 4 im Rahmen der Freilegung der Kabelfolie 5 ggf. aber auch nach dem Abisolieren des Kabelmantels 6 erfolgen.

Die Figuren 4 bis 10 zeigen jeweils das elektrische Kabel 1 mit dem zu bearbeitenden Kabelabschnitt A in isometrischer Darstellung. Bei dem dargestellten zu bearbeitenden Kabelabschnitt A handelt es sich vorliegend um einen Endabschnitt des elektrischen Kabels 1.

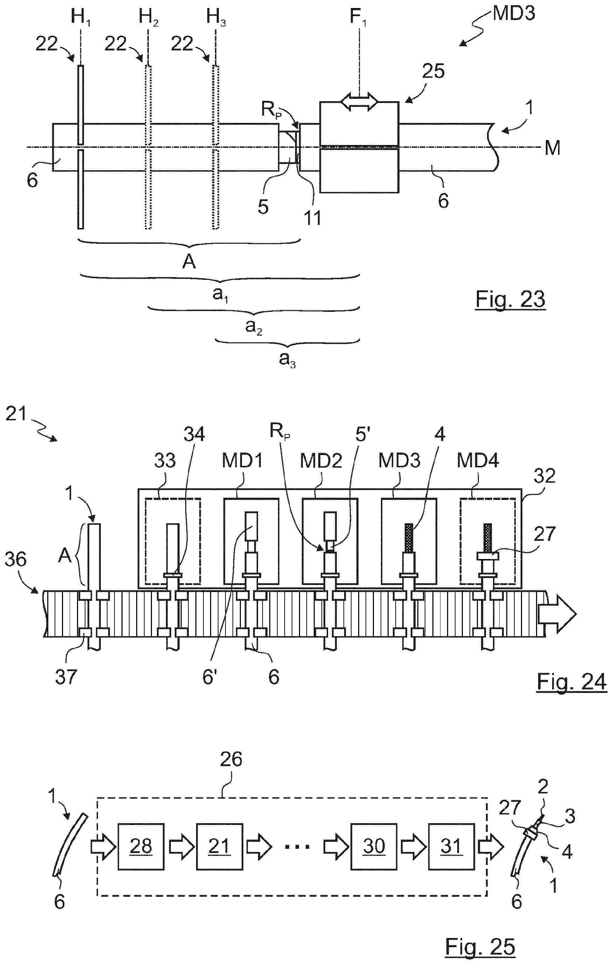

Es kann vorgesehen sein, die Kabelfolie 5 in dem zu bearbeitenden Kabelabschnitt A zunächst zumindest teilweise freizulegen, wie beispielsweise in den Figuren 4 und 5 dargestellt. Dies erfolgt vorzugsweise im Rahmen einer Kabelbearbeitung durch ein erstes Modul MD1 einer Baugruppe 32 von voneinander unabhängigen Modulen, wie nachfolgend noch insbesondere im Rahmen der Fig. 24 beschrieben. Hierfür kann der Kabelmantel 6, insbesondere unter Verwendung eines nur schematisch angedeuteten Messers 7, in bekannter Weise zumindest teilweise umlaufend eingeschnitten werden, vorzugsweise derart, dass einer oder mehrere Stege oder ein schmaler umlaufender Kabelmantelring zurückbleiben und die darunterliegende Kabelfolie 5 somit möglichst unbeschädigt bleibt. Fig. 4 zeigt einen vollständig umlaufenden Schnitt 8, der entlang der Längsachse bzw. Kabelmittelachse M die Länge des zu bearbeitenden Kabelabschnitts A definiert.

Das Einschneiden und das Abziehen bzw. der Teilabzug des Kabelmantels 5 mit dem Messer 7 wird vorzugsweise automatisiert vorgenommen.

Es kann optional vorgesehen sein, im Rahmen dieses Verfahrensschritts bzw. im Rahmen der Bearbeitung durch das erste Modul MD1 oder im Rahmen der Bearbeitung des Kabels 1 durch ein dem ersten Modul MD1 vorgeordneten Bestückungsmoduls 33 das Kabel 1 mit wenigstens einem Steckverbinderteil zu bestücken, beispielsweise mit einem gestrichelt in Fig. 4 dargestellten Dichtring 34.

In Fig. 5 wird dargestellt, dass nach dem Einbringen des Schnitts 8 der abgetrennte Kabelmantel bzw. das abgetrennte Kabelmantelstück 6' zumindest zum Teil in Längsrichtung bzw. in Axialrichtung (entlang der Kabelmittelachse M) in Pfeilrichtung von dem elektrischen Kabel 1 abgezogen wird derart, dass die Kabelfolie 5 zumindest teilweise freigelegt und für die nachfolgenden Verfahrensschritte zugänglich wird. Auch dieser Verfahrensschritt kann im Rahmen der Kabelbearbeitung durch das erste Modul MD1 erfolgen.

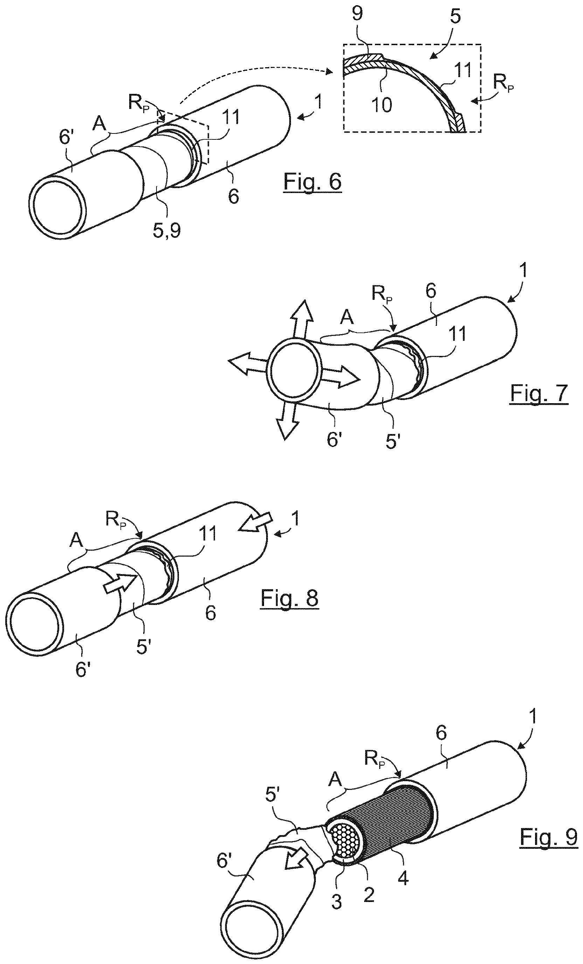

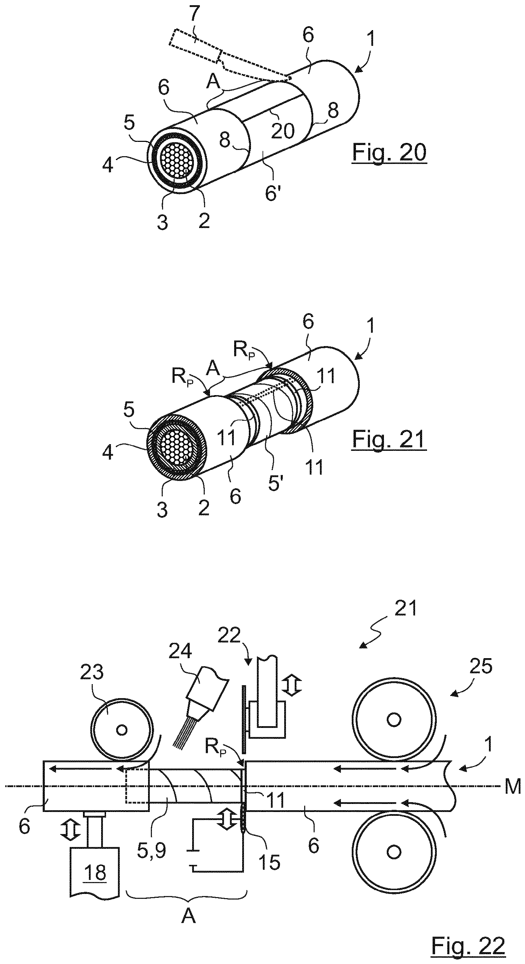

Zumeist ist die Kabelfolie 5 streifenförmig auf die darunter befindlichen Komponenten des Kabels 1, vorliegend das Kabelschirmgeflecht 4 bzw. spiralförmig aufgewickelt, wie in den Figuren 6 bis 10 und in den Figuren 21 bis 23 dargestellt. Dies ist aber nicht zwingend der Fall.

Es ist im Ausführungsbeispiel vorgesehen, wie in Fig. 6 angedeutet, nach dem Freilegen der Kabelfolie 5 und vor dem Entfernen der Kabelfolie 5 zumindest in einer der Kabelmittelachse M abgewandten Außenschicht 9 der Kabelfolie 5 die mechanische Belastbarkeit der Kabelfolie 5 zumindest im Bereich einer vorgesehenen Rissposition R_{P} zu reduzieren. Die vorgesehene Rissposition R_{P} ist in Fig. 6 angedeutet und befindet sich vorzugsweise an oder nahe der Schnittkante des verbleibenden Kabel-mantels 6. Dies erfolgt vorzugsweise im Rahmen einer Kabelbearbeitung durch ein zweites Modul MD2 der Baugruppe 32, das dem ersten Modul MD1 nachgeordnet ist, wie nachfolgend noch insbesondere im Rahmen der Fig. 24 beschrieben.

In Fig. 6 ist ferner ein vergrößerter Abschnitt der vorgesehenen Rissposition R_{P} gezeigt, der einen schematischen Schnitt durch die Kabelfolie 5 zeigt, wobei die umgebenden und innenliegenden Bereich des Kabels 1 zur Vereinfachung nicht dargestellt sind. In der Detailansicht sind zunächst die Außenschicht 9 der Kabelfolie 5 und auch eine unter der Außenschicht 9 befindliche Innenschicht 10 der Kabelfolie 5 dargestellt. Bei der im Ausführungsbeispiel dargestellten Kabelfolie 5 handelt es sich um eine Verbundfolie aus wenigstens zwei Einzelschichten, wobei die Innenschicht 10 aus wenigstens einer der Einzelschichten und die Außenschicht 9 aus der oder den weiteren Einzelschichten gebildet ist (vorliegend eine zweite Einzelschicht), und wobei die Innenschicht 10 vorzugsweise derart gebildet ist, dass diese leichter mechanisch bricht als die Außenschicht 9. Dabei kann insbesondere vorgesehen sein, dass eine Verbundfolie aus einem Kunststoff, vorzugsweise PET, und einem Metall, vorzugsweise Aluminium oder Kupfer, verwendet wird, wobei die Außenschicht 9 durch eine Einzelschicht aus dem Kunststoff und die Innenschicht 10 aus einer weiteren Einzelschicht aus dem Metall besteht.

Grundsätzlich kann auch vorgesehen sein, dass eine Kabelfolie 5 aus nur einer einzigen Einzelschicht bzw. aus einem einzigen Grundmaterial besteht. Die Außenschicht 9 kann dabei die komplette Kabelfolie 5 umfassen oder aber einen Teilbereich, wobei die Innenschicht 10 den verbleibenden Teilbereich umfasst oder keine Innenschicht 10 vorgesehen ist. Es kann auch vorgesehen sein, dass mehrere Kabelfolien 5, die je-weils aus einer Einzelschicht (oder mehreren Einzelschichten) bestehen, übereinander geschichtet verwendet werden. Auch dies ist als eine erfindungsgemäße Kabelfolie 5 bzw. Verbundfolie zu verstehen.

Im Ausführungsbeispiel ist vorgesehen, dass die mechanische Belastbarkeit zumindest teilringförmig, vollständig oder abschnittsweise umlaufend entlang des Umfangs der Kabelfolie 5 reduziert wird.

Insbesondere durch (partielles) Entfernen der Außenschicht 9, Prägen der Außenschicht 9 oder Perforieren der Außenschicht 9 kann die mechanische Belastbarkeit der Kabelfolie 5 verringert werden. Beispielsweise kann vorgesehen sein, dass ein Riss 11 an der vorgesehenen Rissposition R_{P} derart in die Kabelfolie 5 eingebracht wird, dass sich der Riss 11 durch die Außenschicht 9 (wie in Fig. 6 dargestellt) und vorzugsweise zumindest teilweise durch die unter der Außenschicht 9 befindliche Innenschicht 10 der Kabelfolie 5 erstreckt.

Die mechanische Belastbarkeit der Kabelfolie 5 kann im Ausführungsbeispiel insbesondere dadurch reduziert werden, dass die Torsionsfestigkeit und/oder die Biegefestigkeit der Kabelfolie 5, insbesondere der Außenschicht 9 der Kabelfolie 5, reduziert wird und/oder dass die Brüchigkeit der Außenschicht 9 der Kabelfolie 5 erhöht wird. Ein Riss 11 oder eine sonstige optisch sichtbare Beeinflussung der Kabelfolie 5 sind dabei nicht unbedingt erforderlich - die mechanische Beeinflussung kann auch unsichtbar, beispielsweise durch chemische Veränderungen in der Kabelfolie 5 erfolgen.

In der Detailansicht der Fig. 6 ist ein teilringförmiger Riss 11 an der vorgesehenen Rissposition R_{P} dargestellt bzw. die Außenschicht 9 ist teilringförmig entlang des Umfangs der Kabelfolie 5 abgetragen/entfernt worden. Die hierdurch entstandene Sollbruchstelle kann gegebenenfalls ausreichen, um die Kabelfolie 5 nachfolgend leicht zu entfernen. Vorzugsweise wird die mechanische Belastbarkeit allerdings möglichst vollständig umlaufend entlang des Umfangs der Kabelfolie 5 reduziert bzw. wird die Außenschicht 9 möglichst vollständig abgetragen. Vornehmlich zur Verdeutlichung und Darstellung der Außenschicht 9 und der Innenschicht 10 in einer gemeinsamen Darstellung ist vorliegend ein teilringförmiger Riss 11 gezeigt.

Erfindungsgemäß kann eine thermische Behandlung, eine chemische Behandlung, eine abrasive Behandlung, ein Saugvorgang und/oder ein Aufkleben und Abziehen einer Abziehhilfe 12 vorgesehen sein, um die Kabelfolie 5 zu entfernen oder die Entfernung der Kabelfolie 5 zu unterstützen, insbesondere indem durch die vorgenannten Maßnahmen die mechanische Belastbarkeit der Kabelfolie 5, insbesondere in der Rissposition R_{P}, reduziert wird. Die Kabelfolie 5 kann auch eingeschnitten werden.

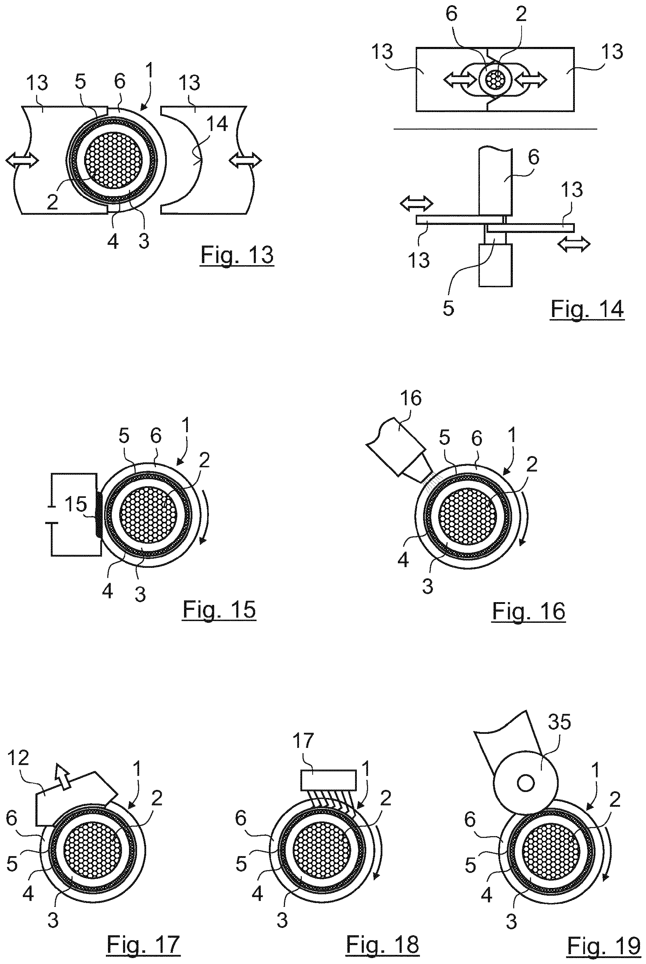

Die thermische Behandlung kann dabei insbesondere einen Schmelzprozess umfassen. In den Figuren 13 bis 15 sind zwei Möglichkeiten einer thermischen Vorbearbeitung in Form eines Schmelzprozesses schematisch darstellt.

In Fig. 13 ist gezeigt, wie zwei erhitzte Formwerkzeuge 13 beidseits an die Kabelfolie 5 bzw. an das Kabel 1 im Bereich der vorgesehenen Rissposition R_{P} zugeführt werden. Bei den erhitzten Kontaktflächen 14 der Formwerkzeuge 13 kann es sich beispielsweise um stumpfe Werkzeugschneiden handeln, beispielsweise mit einer Breite von 1 mm oder mehr, die die Kabelfolie 5 allerdings nicht einzuschneiden vermögen. Alternativ zu der Verwendung von zwei Formwerkzeugen 13 kann auch nur ein Formwerkzeug 13 oder können drei, vier oder noch mehr Formwerkzeuge 13 verwendet werden, gegebenenfalls können nach dem Schmelzen zwischen den Formwerkzeugen 13 auch Stege in der Außenschicht 9 der Kabelfolie 5 entlang des Umfangs der Kabelfolie 5 verbleiben. Wenn eines oder mehrere Formwerkzeuge 13 verwendet werden, die die Kabelfolie 5 nicht vollständig umfassen, kann das Formwerkzeug 13 und/oder das elektrische Kabel 5 während der thermischen Vorbearbeitung ggf. gedreht werden, um ein Abschmelzen entlang des Umfangs des Kabels 1 zu ermöglichen.

Grundsätzlich kann optional vorgesehen sein, das wenigstens eine Formwerkzeug 13 während der Bearbeitung entlang des Umfangs des Kabels 1 um das Kabel 1 zu bewegen.

In Fig. 14 ist eine weitere mögliche Ausgestaltung für die thermische Behandlung dargestellt, bei der wiederum zwei erhitzte Formwerkzeuge 13 beiderseits an die Kabelfolie 5 bzw. an das Kabel 1 zugestellt werden. Die Formwerkzeuge 13 sind dabei in Axialrichtung versetzt und fahren bei der Zustellung an das Kabel 1 aneinander vorbei. Hierdurch kann eine vorteilhafte Zentrierung des Kabel 1 zwischen den Formwerkzeugen 13 ermöglicht werden, was die Bearbeitung der Kabelfolie 5 verbessern kann.

Ein weiteres Beispiel einer thermischen Behandlung zum An- oder Abschmelzen der Kabelfolie 5 zumindest im Bereich der vorgesehenen Rissposition R_{P} ist in Fig. 15 dargestellt. Anstelle eines erhitzten Formwerkzeugs 13 wird vorliegend ein Heizdraht bzw. eine Heizspule 15 verwendet, wobei das Kabel 1 (alternativ oder zusätzlich auch der Heizdraht 15) während der Vorbearbeitung gedreht werden kann, wie durch den Pfeil in Fig. 15 angedeutet.

Vorzugsweise wird für den Schmelzprozess eine Schmelztemperatur verwendet, die größer ist als die Schmelztemperatur der Außenschicht 9 der Kabelfolie 5, aber kleiner ist als die Schmelztemperatur der Innenschicht 10 der Kabelfolie 5 und/oder die Schmelztemperatur sonstiger Komponenten des Kabels 1, insbesondere des Kabelschirmgeflechts 4, des Isolationswerkstoffs 3 und/oder des wenigstens einen Innenleiters 2 des Kabels 1. Beispielsweise kann eine Schmelztemperatur von 100 °C bis 1.000 °C oder mehr, vorzugsweise 200 °C bis 800 °C, besonders bevorzugt 300 °C bis 700 °C und ganz besonders bevorzugt 300 °C bis 400 °C, beispielsweise 360 °C bis 380 °C, vorgesehen sein. Die Schmelztemperatur kann regelbar sein.

Es kann auch vorgesehen sein, entgegen der Detailansicht in Fig. 6, nicht nur die Außenschicht 9 der Kabelfolie 5, sondern auch die Innenschicht 10 der Kabelfolie 5 abzutragen bzw. deren mechanische Belastbarkeit zu reduzieren (durch eine beliebige erfindungsgemäße Variante zum Entfernen oder Unterstützen des Entfernens der Kabelfolie).

Beispielsweise kann vorgesehen sein, eine Schmelztemperatur zu wählen derart, dass die Außenschicht 9 und die Innenschicht 10 der Kabelfolie 5 abgeschmolzen werden, während die darunter befindlichen Komponenten des elektrischen Kabels 1 unbeschädigt bleiben.

Die thermische Behandlung kann auch derart gestaltet werden, dass die Kabelfolie 5 über zumindest eine Teillänge, gegebenenfalls über die Gesamtlänge des zu bearbeitenden Kabelabschnitts A thermisch entfernt bzw. abgeschmolzen wird.

Im Zuge einer thermischen Behandlung kann auch vorgesehen sein, dass ein Kälteprozess durchgeführt wird. Dabei kann beispielsweise eine Vereisung unter Verwendung von Flüssigstickstoff oder einem sonstigen Kältemittel zumindest im Bereich der vorgesehenen Rissposition R_{P} vorgesehen sein, wodurch die Brüchigkeit zumindest der Außenschicht 9 der Kabelfolie 5 erhöht werden kann.

In den Figuren 16 bis 19 sind weitere Möglichkeiten zur Reduzierung der mechanischen Belastbarkeit der Kabelfolie 5, gegebenenfalls auch zur unmittelbaren vollständigen Entfernung der Kabelfolie 5 schematisch dargestellt.

In Fig. 16 ist eine Zuführeinrichtung 16 für chemische Stoffe gezeigt, wodurch eine chemische Behandlung erfolgen kann. Beispielsweise kann durch die Zuführeinrichtung 16 eine Säure, eine Base oder ein sonstiger chemischer Stoff, der eine Reaktion mit dem Material der Kabelfolie 5, insbesondere mit der Außenschicht 9 auslöst, beispielsweise in Form einer Oxidation, zugeführt wird, wodurch die mechanische Belastbarkeit der Kabelfolie 5 reduziert wird. Durch die Zuführeinrichtung 16 kann ferner der erwähnte Flüssigstickstoff zugeführt werden (es kann hierfür allerdings auch eine gesonderte Kältezufuhreinrichtung vorgesehen sein). Vorzugsweise kann das Kabel 1 (oder die Zuführeinrichtung 16) während der Zuführung des chemischen Stoffs gedreht werden.

In Fig. 17 ist eine Vorbehandlung mit einer Abziehhilfe 12 dargestellt. Dabei ist vorgesehen, dass die Abziehhilfe 12 auf die Außenschicht 9 der Kabelfolie 5 zumindest im Bereich der vorgesehenen Rissposition R_{P} aufgeklebt bzw. stoffschlüssig mit der Außenschicht 9 verbunden wird, wonach die Abziehhilfe 12 in radialer Richtung von der Kabelmittelachse M in Pfeilrichtung wegbewegt wird, wodurch die Kabelfolie 5, zumindest aber die Außenschicht 9 der Kabelfolie 5, ein/abreißt. Gegebenenfalls kann hierdurch die Kabelfolie 5 bereits komplett entfernt werden. Es können auch mehrere Abziehhilfen 12 entlang des Umfangs der Kabelfolie 5 verteilt angeordnet werden, beispielsweise zwei, drei, vier oder noch mehr Abziehhilfen 12. Die Abziehhilfe(n) 12 kann/können eine konkave Form aufweisen, um möglichst großflächig auf die Kabelfolie 5 aufklebbar zu sein. Gegebenenfalls kann auch eine drehende Bewegung der Abziehhilfe 12 oder des Kabels 1 zu einem Einreißen der Kabelfolie 5 führen.

In einer ähnlichen, alternativen Variante kann auch ein Saugvorgang anstelle der Abziehhilfe 12 vorgesehen sein. Dabei kann die Kabelfolie 5 bzw. die Außenschicht 9 der Kabelfolie 5 zumindest im Bereich der vorgesehenen Rissposition R_{P} mit einer Saugeinrichtung (nicht dargestellt) angesaugt und hierdurch an/abgerissen bzw. abgezogen werden.

In Fig. 17 ist als Beispiel für eine abrasive Behandlung eine Drahtbürste 17 schematisch dargestellt, die über die Oberfläche der Kabelfolie 5 bzw. über die Außenschicht 9 bewegt wird, beispielsweise indem das elektrische Kabel 1 gedreht wird, und hierdurch die Außenschicht 9 und/oder die Innenschicht 10 abträgt. Anstelle einer Drahtbürste 17 können auch vergleichbare abrasive Mittel vorgesehen sein, beispielsweise eine Schleifeinrichtung oder eine Kunststoffbürste.

Hinsichtlich eines Einschneidens der Kabelfolie 5 kann beispielsweise das in Fig. 4 angedeutete und beschriebene Messer 7 oder die nachfolgend noch beschriebene Schneideinrichtung 22 wiederverwendet werden. Vorzugsweise kann auch ein Rundmesser 35, wie in Fig. 19 dargestellt verwendet werden, um die Kabelfolie 5 zu behandeln. Das Rundmesser 35 kann sich auf dem Umfang des Kabels 1 bzw. auf dem Umfang der Kabelfolie 5 abrollen, wodurch eine Beschädigung von unter der Kabelfolie 5 befindlicher Komponenten des Kabels 1 vermieden werden kann. Wahlweise kann das Rundmesser 35 um das Kabel 1 bewegt oder das Kabel 1 während der Bearbeitung gedreht werden, wie dargestellt. Auch ein Bewegen bzw. Abrollen des Rundmessers 35 entlang des Umfangs der Kabelfolie 5 und ein gleichzeitiges Drehen des Kabels 1 ist möglich.

Vor dem Entfernen der Kabelfolie 5 kann vorgesehen sein, dass der zu bearbeitende Kabelabschnitt A derart verdreht und/oder verbogen wird, dass die Kabelfolie 5 im Kabelabschnitt A, insbesondere an der vorgesehenen Rissposition R_{P}, ringförmig umlaufend einreißt, wie in Fig. 7 angedeutet. Dies erfolgt vorzugsweise im Rahmen einer Kabelbearbeitung durch ein drittes Modul MD3 der Baugruppe 32, das dem zweiten Modul MD2 nachgeordnet ist, wie nachfolgend noch insbesondere im Rahmen der Fig. 24 beschrieben. Insbesondere wenn die Brüchigkeit der Kabelfolie 5, also die Tendenz unter mechanischer Belastung zu brechen, durch Reduzieren der mechanischen Belastbarkeit zumindest der Außenschicht 9 der Kabelfolie 5 zumindest im Bereich der vorgesehenen Rissposition R_{P} erhöht ist, reißt die Kabelfolie 5 an der vorgesehenen Rissposition R_{P} nach entsprechender mechanischer Beanspruchung leicht ein. Ein gegebenenfalls bereits vorhandener, beispielsweise teilringförmig umlaufender Riss 11, der durch eine der vorgenannten Behandlungen, insbesondere nach den Figuren 12 bis 19, eingebracht wurde, kann sich hierdurch verstärken, bis die Kabelfolie 5 vollständig durchgerissen ist. Ein Riss 11 kann sich dadurch aber auch überhaupt erst bilden. Vorzugsweise ist die Kabelfolie 5 nach der mechanischen Belastung des zu bearbeitenden Kabelabschnitts A vollständig abgetrennt.

Zum Verdrehen und/oder Verbiegen des zu bearbeitenden Kabelabschnitts A können Aktuatoren verwendet werden. Beispielsweise zeigt Fig. 11 die Verwendung von vier Linearaktuatoren 18, um den zu bearbeitenden Kabelabschnitt A in zwei Freiheitsgraden zu verbiegen. Hierdurch kann eine wie in Fig. 7 durch die Pfeile dargestellte Bewegung erzeugt werden. Selbstverständlich können beliebige Aktuatoren vorgesehen sein, um eine derartige Bewegung oder eine ähnliche Bewegung auszuführen, die zu einer mechanischen Belastung und schließlich einem reißen der Kabelfolie 5 führt.

Beispielsweise kann auch, wie in Fig. 12 dargestellt, eine Rotationseinrichtung bzw. ein Exzenter 19 verwendet werden, um den zu bearbeitenden Kabelabschnitt A zu verdrehen. Die Darstellung der Fig. 12 ist in ihren Abmessungen übertrieben und lediglich schematisch zu verstehen.

Es kann vorgesehen sein, das Kabel 1 während dem Verfahrensschritt des Verdrehens und/oder Verbiegens im Bereich der vorgesehenen Rissposition R_{P} zu fixieren. Beispielsweise können die zuvor beschriebenen Formwerkzeuge 13 im Falle einer thermischen Behandlung der Kabelfolie 5 bis zum Abschluss des Verfahrensschritts des Verdrehens und/oder Verbiegens noch geschlossen bleiben.

Es kann außerdem vorgesehen sein, das Kabel 1 oder zumindest den zu bearbeitenden Kabelabschnitt A nach dem Verfahrensschritt des Verdrehens und/oder Verbiegens, vorzugsweise vor weiteren Verfahrensschritten, zunächst geradezurichten. Beispielsweise können hierzu zwei Formwerkzeuge oder stumpfe Klingen an das Kabel 1 zugestellt werden.

Nach dem Abreißen kann die Kabelfolie bzw. das abgetrennte Kabelfolienstück 5' optional in Axialrichtung entlang der Kabelmittelachse M gestaucht werden, wie in Fig. 8 durch die beiden Pfeile angedeutet. Dies erfolgt vorzugsweise ebenfalls im Rahmen einer Kabelbearbeitung durch das dritte Modul MD3 der Baugruppe 32.

Die Stauchung erfolgt vor dem Entfernen des Kabelfolienstücks 5' von dem zu bearbeitenden Abschnitt A, ansonsten allerdings zu einem beliebigen Zeitpunkt während der Kabelbearbeitung. Die vorstehend beschriebene Reihenfolge der Verfahrensschritte ist somit nur beispielhaft zu verstehen. Vorzugsweise wird die Kabelfolie 5 oder das Kabelfolienstück 5' gestaucht, nachdem die Kabelfolie 5 zumindest teilweise freigelegt wurde, besonders bevorzugt nachdem die mechanische Belastbarkeit der Kabelfolie 5 reduziert wurde und ganz besonders bevorzugt, nachdem das Kabelfolienstück 5' durch das Verdrehen und/oder Verbiegen abgerissen wurde.

Vorzugsweise wird das Kabelfolienstück 5' mittelbar gestaucht, indem ein die Kabelfolie 5 umhüllender Mantel gestaucht wird. Im Ausführungsbeispiel wird das Kabelfolienstück 5' mittelbar durch Stauchen des Kabelmantelstücks 6' gestaucht. Grundsätzlich kann ein mittelbares Stauchen aber auch durch Stauchen eines anderen Mantels erfolgen, beispielsweise durch Stauchen einer nachträglich auf die freigelegte Kabelfolie 5 aufgebrachten Hülle (nicht dargestellt).

Nach dem Stauchen wird das Kabelfolienstück 5 schließlich von dem zu bearbeitenden Kabelabschnitt A entfernt. Auch dies erfolgt vorzugsweise im Rahmen einer Kabelbearbeitung durch das dritte Modul MD3 der Baugruppe 32. Wenn, wie im Ausführungsbeispiel dargestellt, der abgeschnittene Kabelmantel bzw. das Kabelmantelstück 6' noch nicht vollständig von dem Kabel 1 entfernt wurde, kann das Kabelfolienstück 5' zusammen mit dem Kabelmantelstück 6' abgezogen werden (vgl. Fig. 9), da die Kabelfolie 5, je nach Ausführung, meist gut an dem Kabelmantel 6 haftet. Grundsätzlich kann das Kabelfolienstück 5' nach dem Stauchen von dem zu bearbeitenden Kabelabschnitt A allerdings auf beliebige Art und Weise entfernt werden, beispielsweise indem das Kabelfolienstück 5' abgebürstet, abgeblasen, abgewickelt und/oder abgestreift wird. Es kann auch vorgesehen sein, das Kabelfolienstück 5' und/oder das Kabelmantelstück 6' zu entfernen, indem die Schneideinrichtung 22, beispielsweise ein in Fig. 4 beschriebenes Messer 7, radial an die Kabelmittelachse M zugestellt und anschließend eine axiale Bewegung des Kabels 1 und/oder des Messer 7 durchgeführt wird, um das Kabelfolienstück 5' und/oder das Kabelmantelstück 6' abzustreifen. Anschließend liegt die unter der Kabelfolie 5 befindliche Komponente des elektrischen Kabels 1 frei, vorliegend das Kabelschirmgeflecht 4.

Nachdem das Kabelfolienstück 5' entfernt ist, können weitere, übliche und bekannte Maßnahmen zur Konfektionierung oder zur weiteren Abisolation des elektrischen Kabels 1 vorgesehen sein (je nach Bedarf). In Fig. 10 ist beispielhaft und schematisch dargestellt, wie das freigelegte Kabelschirmgeflecht 4 nach hinten entlang der Kabelmittelachse M umgeschlagen wurde, um beispielsweise an einem (nicht dargestellten) Steckverbinder befestigt und mit diesem elektrisch verbunden zu werden. Nachfolgend könnte noch der Isolationswerkstoff 3 entfernt und der Innenleiter 2 freigelegt und mit einem nicht dargestellten Steckverbinder kontaktiert werden.

Es kann auch vorgesehen sein, dass die Baugruppe 32 ein dem dritten Modul MD3 nachgeordnetes viertes Modul MD4 aufweist, das ausgebildet ist, um eine Stützhülse oder eine sonstige Komponente eines Steckverbinders auf das Kabel 1 aufzubringen.

Im Rahmen der Bearbeitung des Kabels 1 durch die Baugruppe 32 können auch noch weitere Module vorgesehen sein.

Bei dem zu bearbeitenden Kabelabschnitt A kann es sich um ein bereits dargestelltes Kabelendstück handeln. Es kann sich aber auch um ein Kabelfenster handeln, wie in den Figuren 20 und 21 dargestellt. Ein Kabelfenster kann dabei auf bekannte Weise abisoliert werden, beispielsweise indem zwei ringförmig umlaufende Schnitte 8 und ein Längsschnitt 20 zwischen den ringförmigen Schnitten 8 in den Kabelmantel 6 eingebracht werden, wie in Fig. 20 angedeutet. Vorzugsweise erfolgen auch diese Verfahrensschritte automatisiert. Anschließend kann der Kabelmantel bzw. ein abgetrenntes Kabelmantelstück 6' entfernt werden, wodurch die im Ausführungsbeispiel darunter befindliche Kabelfolie 5 freiliegt. Schließlich können die bereits zuvor beschriebenen Schritte in analoger Weise durchgeführt werden, um die Kabelfolie 5 zu entfernen. Beispielsweise können in diesem Fall auch zwei Risspositionen R_{P} vorgesehen sein bzw. kann vorgesehen sein, dass die mechanische Belastbarkeit an zwei entlang der Kabelmittelachse M verteilt angeordneten Stellen zumindest teilringförmig, vollständig oder abschnittsweise umlaufend reduziert wird, wonach die Kabelfolie 5 zwischen den vorgesehenen Risspositionen R_{P} beispielsweise verdreht wird, wodurch diese an den vorgesehenen Risspositionen R_{P} abreißt. Anschließend kann die Kabelfolie 5 gestaucht werden, beispielsweise indem die beiden Enden des geöffneten Kabelmantels 6 aufeinander zubewegt werden, um die Kabelfolie 5 mittelbar zu stauchen. Der abgetrennte mittlere Abschnitt der Kabelfolie 5 kann infolge leicht entfernt werden. Alternativ oder zusätzlich kann auch vorgesehen sein, die mechanische Belastbarkeit der Kabelfolie 5 entlang der Kabelmittelachse M zu reduzieren, wie in Fig. 21 durch die gestrichelt dargestellte Rissposition R_{P} angedeutet ist.

In Fig. 22 ist eine Vorrichtung 21 zum automatisierten Entfernen der Kabelfolie 5 von einem zu bearbeitenden Kabelabschnitt A eines elektrischen Kabels 1 schematisch dargestellt. Fig. 22 zeigt für einen Gesamtüberblick eine Vorrichtung, bei der u. a. die Merkmale der Module 33, MD1, MD2, MD3, MD4, der Baugruppe 32 kombiniert wurden. Erfindungsgemäß werden die in Fig. 22 in Kombination dargestellten Merkmale vorzugsweise aber auf die einzelnen Module 33, MD1, MD2, MD3, MD4 der Baugruppe 32 verteilt. Auch eine beliebige Kombination der im Rahmen der Fig. 22 gezeigten Merkmale kann im Rahmen der Erfindung beansprucht werden.

Es kann wenigstens ein Heizdraht 15, wenigstens ein Formwerkzeug 13, wenigstens eine Kältezufuhreinrichtung (nicht dargestellt), wenigstens eine Abziehhilfe 12, wenigstens eine Absaugeinrichtung (nicht dargestellt) und/oder wenigstens eine Zuführeinrichtung 16 für chemische Stoffe vorgesehen sein, um zumindest eine von der Kabelmittelachse M abgewandte Außenschicht 9 der im Bereich des zu bearbeitenden Kabelabschnitts A zumindest teilweise freigelegten Kabelfolie 5 zu behandeln, um die Kabelfolie 5 zu entfernen oder um zur Unterstützung der Entfernung der Kabelfolie 5 deren mechanische Belastbarkeit zumindest im Bereich der vorgesehenen Rissposition R_{P} zu reduzieren. Dabei können Mittel vorgesehen sein (beispielsweise wenigstens ein Linearaktuator 18 und/oder eine Rotationseinrichtung bzw. ein Exzenter 19), um den zu bearbeitenden Kabelabschnitt A zu verdrehen und/oder zu verbiegen.

Schließlich kann auch eine Schneideinrichtung 22 zum Einschneiden und gegebenenfalls zum Abziehen bzw. zum Teilabziehen des Kabelmantels 6 vorgesehen sein. Alle Komponenten können zustellbar ausgebildet sein, wie in Fig. 22 durch die jeweiligen Doppelpfeile angedeutet. Als Mittel zum Verdrehen und/oder Verbiegen des zu bearbeitenden Kabelabschnitts ist in Fig. 22 ein einzelner Linearaktuator 18 beispielhaft dargestellt, es können aber, wie vorstehend beschrieben, beliebig viele Aktuatoren beliebiger Bauart vorgesehen sein.

Ferner ist eine Rolle 23 zum Abstreifen des Kabelmantelstücks 6' dargestellt. Wenn das Kabelfolienstück 5' durch das Abstreifen des Kabelmantelstücks 6' nicht oder nicht vollständig von dem Kabel 1 entfernt wird, kann beispielsweise auch eine Düse 24 vorgesehen sein, um das Kabelfolienstück 5' unter Verwendung von Druckluft von dem Kabel 1 abzublasen.

In einer bevorzugten Ausführungsform kann vorgesehen sein, den Kabelmantel 6 bzw. das abgetrennte Kabelmantelstück 6' / Abisolierstück zusammen mit dem Kabelfolienstück 5' von dem zu bearbeitenden

Kabelabschnitt A abzuziehen. Hierfür kann eine Greifeinrichtung vorgesehen sein, beispielsweise die Fixiereinrichtung, Halteeinrichtung, wenigstens ein Formmesser etc., die das Kabelmantelstück 6' an einer vorteilhaften Stelle greift, wonach die Greifeinrichtung und/oder das Kabel 1 in Axialrichtung bewegt wird, um das Kabelmantelstück 6' und das Kabelfolienstück 5' abzuziehen. Die vorteilhafte Stelle befindet sich vorzugsweise möglichst nah an dem freigelegten Kabelabschnitt. Es kann vorgesehen sein, mittels der Greifeinrichtung einen gewissen Druck auf das Kabelmantelstück 6' auszuüben, um sicherzustellen, dass das Kabelfolienstück 5' auch tatsächlich zusammen mit dem Kabelmantelstück 6' abgezogen wird. Die Zustellung der Greifeinrichtung an das Kabel 1 kann aus diesem Grunde über den Anpressdruck und nicht über eine radiale Position geregelt werden.

Schließlich weist die beispielhaft dargestellte Vorrichtung 21 außerdem eine Kabelzuführeinrichtung 25 für das elektrische Kabel 1 auf.

Die Erfindung kann vorteilhaft innerhalb eines Systems 26 zum Konfektionieren von elektrischen Kabeln 1 vorgesehen sein. Ein System 26 zum Konfektionieren von elektrischen Kabeln 1 ist in Fig. 25 dargestellt. Dabei wird ein Endabschnitt eines Kabels 1 unter Verwendung mehrerer getaktet arbeitender Einrichtungen bzw. einer Vorrichtung nach dem erfindungsgemäßen Verfahren mit einem Steckverbinderteil, beispielsweise einer Stützhülse 27 versehen. Das System 26 kann beispielsweise eine Einrichtung 28 zum Ablängen des Kabels 1, eine Einrichtung 30 zum Öffnen, Aufstellen und/oder Zurückstülpen eines Kabelschirmgeflechts 4, eine Einrichtung 31 zum Aufbringen und Kontaktieren eines Steckverbinderteils und eine Vorrichtung 21 zum Bearbeiten des Kabels 1 gemäß den vorstehenden Ausführungen bzw. wie im Ausführungsbeispiel anhand der Figuren 1 bis 23 beschrieben, umfassen. Selbstverständlich können auch weitere Vorrichtungen oder die mehrfache Verwendung von Vorrichtungen oder Modulen innerhalb des Systems 26 vorgesehen sein. Die Reihenfolge der Bearbeitung des elektrischen Kabels 1 kann anwendungsbedingt variieren. Das dargestellte System 26 ist nur beispielhaft zu verstehen.

Zur Veranschaulichung einiger vorteilhafter Weiterbildungen der Erfindung ist in Fig. 23 ein Ausschnitt des Moduls MD3 schematisch dargestellt.

Es kann vorgesehen sein, dass die die Kabelfolie 5 oder das Kabelfolienstück 5' gestaucht wird, indem der Mantel 6 oder das Mantelstück 6' an einer ersten Halteposition H₁ gehalten wird und wobei das Kabel 1 an einer von der ersten Halteposition H₁ in Axialrichtung beabstandeten, ersten Fixierposition F₁ gehalten wird, wonach die erste Halteposition H₁ und die erste Fixierposition F, relativ aufeinander zubewegt werden. Somit kann der sich in Axialrichtung zwischen der ersten Halteposition H₁ und der ersten Fixierposition F, erstreckende Abschnitt a₁ der Kabelfolie 5 bzw. des Kabelfolienstücks 5' gestaucht werden, um das nachfolgende Entfernen des Kabelfolienstücks 5' zu erleichtern.

Vorzugsweise befindet sich die erste Fixierposition F, außerhalb des zu bearbeitenden Kabelabschnitts A, wie in Fig. 23 dargestellt. Insbesondere hierdurch kann eine bestehende Einrichtung zur Kabelzuführung, beispielsweise die Kabelzuführeinrichtung 25 der Fig. 22 für die Fixierung des Kabels 1 in der ersten Fixierposition F, und für die anschließende Relativbewegung wiederverwendet werden. Vorzugsweise wird die erste Fixierposition F, auf die erste Halteposition H₁ zugestellt.

Es kann von Vorteil sein, die Kabelfolie 5 oder das Kabelfolienstück 5' sequentiell in mehreren Abschnitten a₁, a₂, as entlang der Kabelmittelachse M zu stauchen. Eine abschnittsweise Stauchung kann sich besonders für lange Kabelabschnitte A eignen. Es können beliebig viele Abschnitte vorgesehen sein, insbesondere in Abhängigkeit von der axialen Länge des Kabelabschnitts A. In Fig. 23 sind beispielhaft drei Abschnitte a₁, a₂, as angedeutet.

Es kann hierzu vorgesehen sein, entlang der Kabelmittelachse M verschiedene, in Axialrichtung beabstandete Haltepositionen H₁, H₂, H₃ (und/oder Fixierpositionen) zu verwenden, wobei die zu stauchenden Abschnitte a₁, a₂, as zwischen jeweils aus einer Halteposition H₁, H₂, H₃ und einer Fixierposition F₁ gebildeten Haltepaaren verlaufen, wonach sequentiell für alle gebildeten Haltepaare deren Halteposition H₁, H₂, H₃ und die Fixierposition F, relativ aufeinander zubewegt werden. Besonders vorteilhaft kann es sein, die erste Fixierposition F₁ zu verwenden, um mit mehreren Haltepositionen H₁, H₂, H₃ entsprechende Paare zu bilden, wobei die Fixierposition F, sequentiell auf die jeweiligen Haltepositionen H₁, H₂, H₃ zugestellt wird, während die Haltepositionen H₁, H₂, H₃ unverändert bleiben. Dies ist in Fig. 23 dargestellt. Beispielsweise kann zunächst im ersten Abschnitt a₁ zwischen der ersten Halteposition H₁ und der ersten Fixierposition F₁ gestaucht werden, anschließend im zweiten Abschnitt a₂ zwischen der zweiten Halteposition H₂ und der ersten Fixierposition F, und wiederum anschließend im dritten Abschnitt a₃ zwischen der dritten Halteposition H₃ und der ersten Fixierposition F₁. Auf diese Weise können schließlich beliebig viele Abschnitt (auch nur einer oder zwei Abschnitte) in zeitlicher Abfolge gestaucht werden.

Vorzugsweise wird der Mantel 6 oder das Mantelstück 6' mittels der Schneideinrichtung 22 und/oder mittels des Formwerkzeugs 13 an der wenigstens einen Halteposition H₁, H₂, H₃ und/oder an der wenigstens einen Fixierposition F₁ gehalten. Um den Mantel 6 an der ersten Fixierposition F₁ zu halten kann auch vorteilhaft die Kabelzuführeinrichtung 25 verwendet werden. Grundsätzlich kann allerdings eine beliebige Halteeinrichtung und/oder eine beliebige Fixiereinrichtung vorgesehen sein.

Es kann vorgesehen sein, eine einzige Halteeinrichtung (z. B. eine einzige Schneideinrichtung 22 oder ein einziges Formwerkzeug 13) zu verwenden, um den Mantel 6 oder das Mantelstück 6' sequentiell an den verschiedenen Haltepositionen H₁, H₂, H₃ zu halten. Hierzu kann beispielsweise vorgesehen sein, dass die Halteeinrichtung das Mantelstück 6' zunächst an der ersten Halteposition H₁ hält, wonach die Fixiereinrichtung an die Halteeinrichtung zugestellt wird bzw. entlang des ersten Abschnitts a₁ gestaucht wird. Anschließend kann die Halteeinrichtung von der ersten Halteposition H₁ gelöst und an die zweite Halteposition H₂ zugestellt werden, indem die Halteeinrichtung und/oder das Kabel 1 in Axialrichtung bewegt wird. Anschließend kann entlang des zweiten Abschnitts a₂ gestaucht werden, gefolgt von dem dritten Abschnitt a₃, bei dem ebenso vorgegangen werden kann. Es kann aber auch vorgesehen sein, mehrere Halteeinrichtungen zu verwenden, die jeweils einer Halteposition H₁, H₂, H₃ zugeordnet sind und zur sequentiellen Fixierung des Mantels 6 bzw. des Mantelstücks 6' nacheinander angesteuert werden. Somit können die Halteeinrichtungen unbeweglich ausgebildet sein bzw. auf eine axiale Verschiebung des Kabels 1 im Verlauf der sequentiellen Stauchung verzichtet werden.

Es kann auch vorgesehen sein, den Mantel 6 bzw. das Mantelstück 6' gleichzeitig an mehr als einer Halteposition H₁, H₂, H₃ zu halten, während der Mantel 6 bzw. das Mantelstück 6' erfindungsgemäß gestaucht wird.

Fig. 24 zeigt schließlich eine Vorrichtung 21 zur Bearbeitung eines einen Mantel 6 und eine darunterliegende Kabelfolie 5 aufweisenden elektrischen Kabels 1, umfassend eine Baugruppe 32 von voneinander unabhängigen Modulen 33, MD1, MD2, MD3, MD4 zur Entfernung eines Mantelstücks 6' und eines Kabelfolienstücks 5' von dem Kabel 1'.

Die Baugruppe 32 weist ein erstes Modul MD1 zum Abtrennen des Mantelstücks 6' von dem Kabel 1, ein dem ersten Modul MD1 nachfolgendes zweites Modul MD2 zum Reduzieren der mechanischen Belastbarkeit der Kabelfolie 5 in einer vorgesehenen Rissposition R_{P} und ein dem zweiten Modul MD2 nachfolgendes drittes Modul MD3 zum automatisierten Entfernen des Mantelstücks 6' und des Kabelfolienstücks 5' von dem Kabel 1 auf.

Optional können auch weitere Module vorgesehen sein. Beispielhaft ist ein dem ersten Modul MD1 vorgeordnetes Bestückungsmodul 33 gestrichelt dargestellt, um das Kabel 1 mit wenigstens einem Steckverbinderteil, beispielsweise mit dem Dichtring 34, zu bestücken. Als weiteres Beispiel ist ein dem dritten Modul MD3 nachgeordnetes, viertes Modul MD4 zum Aufbringen einer Stützhülse 27 auf das Kabel 1 ebenfalls gestrichelt dargestellt.

Im Ausführungsbeispiel ist eine Transporteinrichtung 36 vorgesehen, um einen zu bearbeitenden Kabelabschnitt A des Kabels 1 an die Module 33, MD1, MD2, MD3, MD4 der Baugruppe 32 nacheinander zuzustellen. In Abhängigkeit der zu fertigenden Stückzahlen kann die Transporteinrichtung 36 auch entfallen. Die Kabel 1 bzw. Kabelabschnitte A können in diesem Falle auch von einem Mitarbeiter der Produktion zwischen den Modulen 33, MD1, MD2, MD3, MD4 der Baugruppe 32 transportiert werden, beispielsweise auch unter Zuhilfenahme einer Rollenbahn. Vorzugsweise ist die Transporteinrichtung 36 in der Art eines Werkstückträgersystems oder eines Fließbands ausgebildet und transportiert mehrere Kabel 1 von Modul zu Modul, um alle Module 33, MD1, MD2, MD3, MD4 möglichst dauerhaft auszulasten und damit einen hohen Durchsatz bei der Kabelbearbeitung zu erzielen.

Die Transporteinrichtung 36 kann einen oder mehrere Greifeinrichtungen 37 oder Werkstückträger aufweisen, um eines oder mehrere Kabel 1 für den Transport oder die Bearbeitung durch die Module 33, MD1, MD2, MD3, MD4 zu fixieren, beispielsweise auch verdrehsicher zu fixieren. Die Greifeinrichtungen 37 können außerdem ausgebildet sein, um das Kabel 1 oder zumindest den zu bearbeitenden Kabelabschnitt A nach dem Anfahren eines Moduls 33, MD1, MD2, MD3, MD4 für die Bearbeitung an das Modul 33, MD1, MD2, MD3, MD4 zuzustellen, insbesondere in das entsprechende Modul 33, MD1, MD2, MD3, MD4 einzuführen.

Die Erfindung betrifft auch ein Computerprogrammprodukt mit Programmcodemitteln, um ein Verfahren gemäß den vorstehenden Ausführungen durchzuführen, wenn das Programm auf einer Steuereinheit einer Vorrichtung 21 zum Bearbeiten eines elektrischen Kabels 1 ausgeführt wird.
spielsweise auch unter Zuhilfenahme einer Rollenbahn. Vorzugsweise ist die Transporteinrichtung 36 in der Art eines Werkstückträgersystems oder eines Fließbands ausgebildet und transportiert mehrere Kabel 1 von Modul zu Modul, um alle Module 33, MD1, MD2, MD3, MD4 möglichst dauerhaft auszulasten und damit einen hohen Durchsatz bei der Kabelbearbeitung zu erzielen.

Die Transporteinrichtung 36 kann einen oder mehrere Greifeinrichtungen 37 oder Werkstückträger aufweisen, um eines oder mehrere Kabel 1 für den Transport oder die Bearbeitung durch die Module 33, MD1, MD2, MD3, MD4 zu fixieren, beispielsweise auch verdrehsicher zu fixieren. Die Greifeinrichtungen 37 können außerdem ausgebildet sein, um das Kabel 1 oder zumindest den zu bearbeitenden Kabelabschnitt A nach dem Anfahren eines Moduls 33, MD1, MD2, MD3, MD4 für die Bearbeitung an das Modul 33, MD1, MD2, MD3, MD4 zuzustellen, insbesondere in das entsprechende Modul 33, MD1, MD2, MD3, MD4 einzuführen.

Die Erfindung betrifft auch ein Computerprogrammprodukt mit Programmcodemitteln, um ein Verfahren gemäß den vorstehenden Ausführungen durchzuführen, wenn das Programm auf einer Steuereinheit einer Vorrichtung 21 zum Bearbeiten eines elektrischen Kabels 1 ausgeführt wird.

## Patentansprüche

1. Vorrichtung (21) zur Bearbeitung eines einen Mantel (6) und eine darunterliegende Kabelfolie (5) aufweisenden elektrischen Kabels (1), umfassend eine Baugruppe (32) von voneinander unabhängigen Modulen (33, MD1, MD2, MD3, MD4) zur Entfernung eines Mantelstücks (6') und eines Kabelfolienstücks (5') von dem Kabel (1), wobei die Baugruppe (32) ein erstes Modul (MD1) zum Abtrennen des Mantelstücks (6') von dem Kabel (1), ein dem ersten Modul (MD1) nachfolgendes zweites Modul (MD2) zum Reduzieren der mechanischen Belastbarkeit der Kabelfolie (5) in einer vorgesehenen Rissposition (R_{P}) und ein dem zweiten Modul (MD2) nachfolgendes drittes Modul (MD3) zum automatisierten Entfernen des Mantelstücks (6') und des Kabelfolienstücks (5') von dem Kabel (1) aufweist, **dadurch gekennzeichnet, dass** das dritte Modul (MD3) Mittel (18,19) aufweist, um das Kabel (1) im Bereich des zu entfernenden Kabelfolienstücks (5') zu verdrehen und/oder zu verbiegen.

2. Vorrichtung (21) nach Anspruch 1,
**dadurch gekennzeichnet, dass**
das erste Modul (MD1) ausgebildet ist, um nach dem Abtrennen des Mantelstücks (6') einen Teilabzug des Mantelstücks (6') von dem Kabel (1) durchzuführen.

3. Vorrichtung (21) nach Anspruch 1 oder 2,
**dadurch gekennzeichnet, dass**
die Baugruppe (32) ein dem ersten Modul (MD1) vorgeordnetes Bestückungsmodul (33) zum Bestücken des Kabels (1) mit wenigstens einem Steckverbinderteil (34) aufweist.

4. Vorrichtung (21) nach einem der Ansprüche 1 bis 3,
**dadurch gekennzeichnet, dass**
die Baugruppe (32) ein dem dritten Modul (MD3) nachfolgendes viertes Modul (MD4) zum Aufbringen einer Stützhülse auf das Kabel (1) aufweist.

5. Vorrichtung (21) nach einem der Ansprüche 1 bis 4,
**dadurch gekennzeichnet, dass**
eine Transporteinrichtung (36) vorgesehen ist, um einen zu bearbeitenden Kabelabschnitt (A) des Kabels (1) an die Module (33, MD1, MD2, MD3, MD4) der Baugruppe (32) nacheinander zuzustellen.

6. Vorrichtung (21) nach einem der Ansprüche 1 bis 5,
**dadurch gekennzeichnet, dass**
das zweite Modul (MD2) wenigstens ein Rundmesser (35), wenigstens einen Heizdraht (15), wenigstens ein Formwerkzeug (13), wenigstens eine Kältezufuhreinrichtung, wenigstens eine Abziehhilfe (12), wenigstens eine Absaugeinrichtung und/oder wenigstens eine Zuführeinrichtung (16) für chemische Stoffe aufweist, um zumindest eine von der Kabelmittelachse (M) abgewandte Außenschicht (9) der Kabelfolie (5) zu behandeln, um deren mechanische Belastbarkeit zu reduzieren.

7. Vorrichtung (21) nach einem der Ansprüche 1 bis 6,
**dadurch gekennzeichnet, dass**
das dritte Modul (MD3) wenigstens eine Halteeinrichtung (22) aufweist, um das Mantelstück (6') an einer ersten Halteposition (H₁) entlang der Kabelmittelachse (M) zu halten, und wobei das dritte Modul (MD3) eine Fixiereinrichtung (25) aufweist, um den Mantel (6) des Kabels (1) an einer ersten Fixierposition (F₁) zu halten, wobei die Halteeinrichtung (22) und die Fixiereinrichtung (25) derart ausgebildet sind, dass diese relativ aufeinander zustellbar sind, um das Kabelfolienstück (5') unmittelbar oder mittelbar zu stauchen.

8. Verfahren zur Bearbeitung eines einen Mantel (6) und eine darunterliegende Kabelfolie (5) aufweisenden elektrischen Kabels (1), mit der Vorrichtung nach einem der Ansprüche 1 bis 7, wonach die Baugruppe (32) von voneinander unabhängigen Modulen (33, MD1, MD2, MD3, MD4) zur Entfernung eines Mantelstücks (6') und eines Kabelfolienstücks (5') von dem Kabel (1) verwendet wird, wobei das erste Modul (M1) der Baugruppe (32) das Mantelstück (6') von dem Kabel (1) abtrennt, wonach das zweite Modul (MD2) der Baugruppe (32) die mechanische Belastbarkeit der Kabelfolie (5) in einer vorgesehenen Rissposition (R_{P}) reduziert und wonach das dritte Modul (MD3) der Baugruppe (32) das Mantelstück (6') und das Kabelfolienstück (5') automatisiert von dem Kabel (1) entfernt.

9. Verfahren nach Anspruch 8,
**dadurch gekennzeichnet, dass**
das zweite Modul (MD2) zumindest eine der Kabelmittelachse (M) abgewandte Außenschicht (9) der Kabelfolie (5) zumindest im Bereich der vorgesehenen Rissposition (R_{P}) einer thermischen Behandlung, einer chemischen Behandlung, einer abrasiven Behandlung und/oder einem Saugvorgang unterzieht und/oder die Kabelfolie (5) einschneidet und/oder eine Abziehhilfe (12) auf die Kabelfolie (5) aufklebt und abzieht.

10. Verfahren nach Anspruch 8 oder 9,
**dadurch gekennzeichnet, dass**
das zweite Modul (MD2) einen teilringförmig oder ringförmig umlaufenden Riss (11) an der vorgesehenen Rissposition (R_{P}) derart in die Kabelfolie (5) einbringt, dass sich der Riss (11) durch die Außenschicht (9) und vorzugsweise zumindest teilweise auch durch eine unter der Außenschicht (9) befindliche Innenschicht (10) der Kabelfolie (5) erstreckt.

11. Verfahren nach einem der Ansprüche 8 bis 10,
**dadurch gekennzeichnet, dass**
das dritte Modul (MD3) das Kabel (1) im Bereich des zu entfernenden Kabelfolienstücks (5') derart verdreht und/oder verbiegt, dass die Kabelfolie (5) teilringförmig oder ringförmig umlaufend einreißt.

12. Verfahren nach einem der Ansprüche 9 bis 11,
**dadurch gekennzeichnet, dass**
für die thermische Behandlung wenigstens ein erhitztes Formwerkzeug (13) und/oder wenigstens ein Heizdraht (15) verwendet wird, insbesondere um die Kabelfolie (5) an- oder abzuschmelzen.

13. Verfahren nach einem der Ansprüche 8 bis 12,
**dadurch gekennzeichnet, dass**
das dritte Modul (MD3) das Kabelfolienstück (5') in Axialrichtung entlang der Kabelmittelachse (M) staucht, bevor das Kabelfolienstück (5') von dem Kabel (1) entfernt wird.

14. Verfahren nach Anspruch 13,
**dadurch gekennzeichnet, dass**
das dritte Modul (MD3) das Kabelfolienstück (5') mittelbar staucht, indem das das Kabelfolienstück (5') umhüllende Mantelstück (6') gestaucht wird.

## Claims

1. A device (21) for processing an electrical cable (1) having a sheath (6) and, lying therebelow, a cable film (5), comprising a functional group (32) of mutually independent modules (33, MD1, MD2, MD3, MD4) for removing a piece (6`) of the sheath and a piece (5') of the cable film from the cable (1), wherein the functional group (32) has a first module (MD1) for severing the piece (6') of the sheath from the cable (1), a second module (MD2), downstream of the first module (MD1), for reducing the mechanical load-bearing capability of the cable film (5) at an envisaged tearing position (R_{P}), and a third module (MD3), downstream of the second module (MD2), for removing in an automated manner the piece (6') of the sheath and the piece (5') of the cable film from the cable (1), **characterized in that** the third module (MD3) has means (18, 19) for twisting and/or bending the cable (1) in the region of the piece (5') of the cable film to be removed.

2. The device (21) as claimed in claim 1,
**characterized in that**
the first module (MD1), upon severing the piece (6') of the sheath, is configured for carrying out partial stripping of the piece (6') of the sheath from the cable (1).

3. The device (21) as claimed in claim 1 or 2,
**characterized in that**
the functional group (32), upstream of the first module (MD1), has a mounting module (33) for mounting on the cable (1) at least one plug connector part (34).

4. The device (21) as claimed in one of claims 1 to 3,
**characterized in that**
the functional group (32) has a fourth module (MD4), downstream of the third module (MD3), for attaching a support sleeve to the cable (1).

5. The device (21) as claimed in one of claims 1 to 4,
**characterized in that**
a transport installation (36) for successively feeding a cable portion (A) of the cable (1) to be processed to the modules (33, MD1, MD2, MD3, MD4) of the functional group (32) is provided.

6. The device (21) as claimed in one of claims 1 to 5,
**characterized in that**
the second module (MD2) has at least one circular knife (35), at least one heating wire (15), at least one molding tool (13), at least one refrigerated supply installation, at least one stripping aid (12), at least one suctioning installation and/or at least one supply installation (16) for chemicals so as to treat at least one external layer (9) of the cable film (5) that faces away from the cable central axis (M) in order for the mechanical load-bearing capability of said external layer (9) to be reduced.

7. The device (21) as claimed in one of claims 1 to 6,
**characterized in that**
the third module (MD3) has at least one holding installation (22) for holding the piece (6') of the sheath at a first holding position (H) along the cable central axis (M), and wherein the third module (MD3) has a fixing installation (25) for holding the sheath (6) of the cable (1) at a first fixing position (F₁), wherein the holding installation (22) and the fixing installation (25) are configured in such a manner that said installations (22, 25) can be mutually converged so as to directly or indirectly compress the piece (5') of the cable film.

8. A method for processing an electrical cable (1) having a sheath (6) and, lying therebelow, a cable film (5), with a device according to one of claims 1 to 7, in which the functional group (32) of mutually independent modules (33, MD1, MD2, MD3, MD4) is used for removing a piece (6') of the sheath and a piece (5') of the cable film from the cable (1), wherein the first module (MD1) of the functional group (32) severs the piece (6') of the sheath from the cable (1), whereupon the second module (MD2) of the functional group (32) reduces the mechanical load-bearing capability of the cable film (5) at an envisaged tearing position (R_{P}) and whereupon the third module (MD3) of the functional group (32) removes in an automated manner the piece (6') of the sheath and the piece (5') of the cable film from the cable (1).

9. The method as claimed in claim 8,
**characterized in that**
the second module (MD2) subjects at least one external layer (9) of the cable film (5) that faces away from the cable central axis (M), at least in the region of the envisaged tearing position (R_{P}), to a thermal treatment, a chemical treatment, an abrasive treatment and/or a suctioning procedure and/or scores the cable film (5) and/or adhesively bonds a stripping aid (12) to the cable film (5) and strips said stripping aid (12) from the cable film (5).

10. The method as claimed in claim 8 or 9,
**characterized in that**
the second module (MD2) at the envisaged tearing position (R_{P}) incorporates in the cable film (5) a partially ring-shaped or ring-shaped encircling tear (11) in such a manner that the tear (11) extends through the external layer (9) and preferably also at least partially through an internal layer (10) of the cable film (5) that is situated below the external layer (9).

11. The method as claimed in one of claims 8 to 10,
**characterized in that**
the third module (MD3) in the region of the piece (5') of the cable film to be removed twists and/or bends the cable (1) in such a manner that the cable film (5) tears in a partially ring-shaped or ring-shaped encircling manner.

12. The method as claimed in one of claims 9 to 11,
**characterized in that**
at least one heated molding tool (13) and/or at least one heating wire (15) are/is used for the thermal treatment, in particular for fusing or melting the cable film (5).

13. The method as claimed in one of claims 8 to 12,
**characterized in that**
the third module (MD3) compresses the piece (5') of the cable film in the axial direction along the cable central axis (M) before the piece (5') of the cable film is removed from the cable (1).

14. The method as claimed in claim 13,
**characterized in that**
the third module (MD3) indirectly compresses the piece (5') of the cable film **in that** the piece (6') of the sheath that sheathes the piece (5') of the cable film is compressed.

## Revendications

1. Dispositif (21) de traitement d'un câble électrique (1) présentant une gaine (6) et une feuille de câble (5) sous-jacente, comprenant un ensemble (32) de modules (33, MD1, MD2, MD3, MD4) indépendants les uns des autres pour retirer une partie de la gaine (6') et une partie de la feuille de câble (5') du câble (1),
dans lequel,
l'ensemble (32) comprend un premier module (MD1) pour séparer la partie de gaine (6') du câble (1), un deuxième module (MD2) disposé après le premier module (MD1) pour réduire la résistance mécanique de la feuille de câble (5) à une position de déchirement prévue (R_{P}) et un troisième module (MD3) disposé après le deuxième module (MD2) pour retirer de manière automatisée la partie de gaine (6') et la partie de feuille de câble (5') du câble (1), **caractérisé en ce que**,
le troisième module (MD3) comporte des moyens (18,19) pour tordre et/ou plier le câble (1) dans la zone de la partie de feuille de câble (5') à retirer.

2. Dispositif (21) selon la revendication 1,
**caractérisé en ce que**,
le premier module (MD1) est agencé pour réaliser un enlèvement partiel de la partie de gaine (6') du câble (1) après la séparation de la partie de gaine (6').

3. Dispositif (21) selon la revendication 1 ou 2,
**caractérisé en ce que**,
l'ensemble (32) comporte un module d'équipement (33) disposé en amont du premier module (MD1) pour équiper le câble (1) d'au moins un composant de connecteur (34).

4. Dispositif (21) selon l'une des revendications 1 à 3,
**caractérisé en ce que**,
l'ensemble (32) comporte un quatrième module (MD4) disposé en aval du troisième module (MD3) pour la mise en place d'une douille d'appui sur le câble (1).

5. Dispositif (21) selon l'une des revendications 1 à 4,
**caractérisé en ce que**,
un dispositif de transport (36) est prévu pour présenter un tronçon (A) à traiter du câble (1) successivement aux modules (33, MD1, MD2, MD3, MD4) de l'ensemble (32).

6. Dispositif (21) selon l'une des revendications 1 à 5,
**caractérisé en ce que**,
le deuxième module (MD2) comporte au moins un couteau circulaire (35), au moins un fil chauffant (15), au moins un outil de forme (13), au moins un dispositif d'amenée de froid, au moins un dispositif d'aide à l'arrachage (12), au moins un dispositif, d'aspiration et/ou au moins un dispositif d'apport (16) de substances chimiques, afin de traiter au moins une couche extérieure (9) de la feuille de câble (5) éloignée de l'axe central du câble (M) pour réduire sa résistance mécanique.

7. Dispositif (21) selon l'une des revendications 1 à 6,
**caractérisé en ce que**,
le troisième module (MD3) comporte au moins un dispositif de maintien (22) pour maintenir la partie de gaine (6') à une première position d'arrêt (H₁) le long de l'axe central (M) du câble, et dans lequel le troisième module (MD3) comporte un dispositif d'immobilisation (25) pour maintenir la gaine (6) du câble (1) à une première position de d'immobilisation (F₁), dans lequel le dispositif de maintien (22) et le dispositif d'immobilisation (25) sont aménagés de sorte à être mobiles l'un par rapport à l'autre afin de refouler la partie de feuille de câble (5') indirectement ou directement.

8. Procédé pour traiter un câble électrique (1) pourvu d'une gaine (6) et d'une feuille de câble (5) sous-jacente au moyen du dispositif selon l'une des revendications 1 à 7, selon lequel l'ensemble (32) de modules (33, MD1, MD2, MD3, MD4) indépendants les uns des autres destinés à retirer une partie de la gaine (6') et une partie de la feuille de câble (5') du câble (1) est utilisé,
dans lequel le premier module (M1) de l'ensemble (32) sépare la partie de gaine (6') du câble (1), après quoi le deuxième module (MD2) de l'ensemble (32) réduit la résistance mécanique de la feuille de câble (5) à une position de déchirement (R_{P}) prévue, et après quoi le troisième module (MD3) de l'ensemble (32) retire de manière automatisée la partie de gaine (6') et la partie de feuille de câble (5') du câble (1).

9. Procédé selon la revendication 8,
**caractérisé en ce que**,
le deuxième module (MD2) soumet au moins une couche extérieure (9) de la feuille de câble (5) opposée à l'axe central du câble (M), au moins dans la zone de la position de déchirement prévue (R_{P}), à un traitement thermique, un traitement chimique, un traitement abrasif et/ou un processus d'aspiration et/ou coupe la feuille de câble (5) et/ou colle un outil de retrait (12) sur la feuille de câble (5) et l'enlève.

10. Procédé selon la revendication 8 ou 9,
**caractérisé en ce que**,
le deuxième module (MD2) réalise une incision (11) périphérique en forme d'anneau partiel ou en forme d'anneau dans la feuille de câble (5) à la position de déchirement prévue (R_{P}) de sorte à ce que l'incision (11) s'étende à travers la couche extérieure (9) et de préférence au moins partiellement aussi à travers une couche intérieure (10) disposée sous la couche extérieure (9) de la feuille de câble (5).

11. Procédé selon l'une des revendications 8 à 10,
**caractérisé en ce que**,
le troisième module (MD3) tord et/ou plie le câble (1) dans la zone de la partie de feuille de câble (5') à retirer de sorte que la feuille de câble (5) se déchire sur sa périphérie en forme d'anneau partiel ou d'anneau.

12. Procédé selon l'une des revendications 9 à 11,
**caractérisé en ce que**,
le traitement thermique fait appel à au moins un outil de forme (13) chauffé et/ou à au moins un fil chauffant (15), notamment pour faire fondre ou enlever par fusion la feuille de câble (5).

13. Procédé selon l'une des revendications 8 à 12,
**caractérisé en ce que**,
le troisième module (MD3) refoule la partie de feuille de câble (5') en direction axiale le long de l'axe central (M) du câble avant que la partie de feuille de câble (5') ne soit retirée du câble (1).

14. Procédé selon la revendication 13,
**caractérisé en ce que**,
le troisième module (MD3) refoule la partie de feuille de câble (5') directement en refoulant la partie de gaine (6') entourant la partie de feuille de câble (5').
